# EUROPÄISCHE PATENTSCHRIFT

(11) **EP 4 561 397 B1**
(45) Veröffentlichungstag und Bekanntmachung des Hinweises auf die Patenterteilung: **27.05.2026**
(21) Anmeldenummer: 23765142.7
(22) Anmeldetag: 30.08.2023
(51) Int. Cl.: A47B 88/90, A47B 88/925, B23K 26/24, B29C 65/16

(54) **VERFAHREN ZUR HERSTELLUNG EINER SEITENWAND FÜR EINE SCHUBLADE**
METHOD FOR PRODUCING A SIDE WALL FOR A DRAWER
PROCÉDÉ DE FABRICATION DE PAROI LATÉRALE POUR UN TIROIR

(30) Priorität: 09.09.2022 AT 506922022
(43) Veröffentlichungstag der Anmeldung: 04.06.2025
(73) Patentinhaber: JULIUS BLUM GMBH, 6973 Höchst (AT)
(72) Erfinder: BISCHOF, Martin, 6888 Schröcken (AT)
(74) Vertreter: Torggler & Hofmann Patentanwälte - Innsbruck
(86) Internationale Anmeldenummer: PCT/AT2023/060296
(87) Internationale Veröffentlichungsnummer: WO 2024/050577

(56) Entgegenhaltungen:
- WO-A1-2017/106890
- US-A1- 2018 117 707

## Beschreibung

Die Erfindung betrifft ein Verfahren zur Herstellung einer Seitenwand für eine Schublade, umfassend wenigstens ein zumindest abschnittsweise aus einem metallischen Werkstoff bestehendes Trägerprofil und wenigstens ein zumindest abschnittsweise aus einem metallischen Werkstoff bestehendes Hohlprofil, wobei das wenigstens eine Trägerprofil und das wenigstens eine Hohlprofil miteinander mittels wenigstens einer Laserschweißverbindung verschweißt werden. Des Weiteren betrifft die Erfindung eine Seitenwand für eine Schublade, umfassend wenigstens ein Trägerprofil und wenigstens ein Hohlprofil, wobei das wenigstens eine Trägerprofil und das wenigstens eine Hohlprofil zumindest abschnittsweise aus einem metallischen Werkstoff gebildet und miteinander mittels wenigstens einer Laserschweißverbindung verschweißt sind. Weiters betrifft die Erfindung ein Trägerprofil für eine solche Seitenwand. Des Weiteren betrifft die Erfindung eine Anordnung aus zumindest einem Laser und zumindest einer solchen Seitenwand.

Aus dem Stand der Technik sind Seitenwände für Schubladen bekannt, welche ein Trägerprofil und ein Hohlprofil aus Metall umfassen, wobei das Trägerprofil und das Hohlprofil zur Verbindung miteinander durch einen Laser über eine Laserschweißverbindung verbunden sind.

Nachteilig am Stand der Technik ist, dass für eine sichere und sachgemäße Laserschweißverbindung bei gleichzeitig aufrechterhaltener Funktionalität des Trägerprofils als Behältnisschiene Positionen der Laserschweißverbindungen tief im Trägerprofil verortet vorgesehen sein müssen und diese Positionen für die Laserschweißverbindungen insbesondere bei schmalen Trägerprofilen schwer für Laser mit dessen baulichen Größen zugänglich ist. Daher muss der Laser in Entfernung von der gewünschten Laserschweißverbindung außerhalb des Trägerprofils angeordnet werden, um Laserlicht in einem ungünstigen Winkel und mit hoher Distanz zu dem zu verschweißenden Material zu emittieren. Aufgrund des ungünstigen Winkels wird ein hohes Maß an für die Laserschweißverbindung vorgesehenes Laserlicht zumindest temporär im Zuge des Schweißprozesses reflektiert, wodurch Laserintensität sowie Energie ungenützt verloren geht und zudem eine unerwünschte Erhitzung an nicht für Laserschweißverbindungen vorgesehenen Bereichen der Seitenwand (gegebenenfalls mit Deformationen) bedingt wird. Bei unsachgemäßen Laserschweißverbindungen wird eine Standzeit von Schubladen reduziert und es besteht die Gefahr eines unerwünschten Lösens des Trägerprofils vom Hohlprofil während eines Gebrauchs der Seitenwand. Darüber hinaus ist ein optisch einwandfreies Erscheinungsbild von Laserschweißverbindungen essentiell, da ansonsten ein Eindruck vermittelt wird, dass die Seitenwand nicht sicher unter Belastung zu gebrauchen ist.

Weitere Seitenwände für Schubladen sind bereits aus den Veröffentlichungsschriften WO 2017/106890 A1 und US 2018/117707 A1 bekannt.

Die objektive technische Aufgabe der vorliegenden Erfindung besteht daher darin, ein gegenüber dem Stand der Technik verbessertes Verfahren zur Herstellung einer Seitenwand, eine Seitenwand sowie ein Trägerprofil und eine Anordnung anzugeben, bei welchen die Nachteile des Stands der Technik zumindest teilweise behoben sind, und welche sich insbesondere durch eine für die Laserschweißverbindung erforderliche reduzierte Laserleistung und/oder eine verbesserte Qualität der Laserschweißverbindung mit erhöhter Festigkeit der Seitenwand auszeichnen.

Diese Aufgabe wird durch die Merkmale des Anspruches 1 gelöst.

Es ist demnach erfindungsgemäß vorgesehen, dass das wenigstens eine Trägerprofil und/oder das wenigstens eine Hohlprofil vor dem Schweißen wenigstens eine Prägung zur Erhöhung einer Energieaufnahme von Laserlicht wenigstens eines Lasers zur Bildung der wenigstens einen Laserschweißverbindung in einem Bereich und/oder um den Bereich der wenigstens einen Laserschweißverbindung aufweist und die wenigstens eine Prägung im Zuge des Schweißens zumindest bereichsweise aufgeschmolzen wird.

Dadurch wird es erst ermöglicht, dass die Seitenwand - insbesondere das wenigstens eine Trägerprofil und/oder das wenigstens eine Hohlprofil - besonders schmal ausgeführt werden kann, wodurch eine besonders ästhetisch ansprechende Schublade mit erhöhtem Stauraum erwirkt werden kann.

Darüber hinaus kann die wenigstens eine Laserschweißverbindung besonders tief in der Seitenwand oder dem wenigstens einem Trägerprofil angeordnet werden, wodurch die Seitenwand besonders flexibel an spezifische Anforderungen adjustiert werden kann. Limitierende Faktoren für den Schweißvorgang wie Nähe zu dem wenigstens einen Laser oder Einfallswinkel von Laserlicht auf die Schweißstelle nahe einem rechten Winkel respektive einer Normalen können durch die wenigstens eine Prägung signifikant reduziert werden und sind komfortabel über eine konkrete Form beziehungsweise Geometrie der wenigstens einen Prägung anpassbar.

Im Stand der Technik muss der wenigstens eine Laser zudem sehr nahe an die Seitenwand herangeführt werden und/oder mit einer hohen Laserleistung betrieben werden, um einen für ein Aufschmelzen des Materials erforderlichen Energieeintrag trotz Reflexion generieren zu können. Insbesondere aufgrund dieses Sachverhaltes wird eine sensible und teure Optik des wenigstens einen Lasers verschmutzt und eine Bündelung eines Laserstrahls zur Fokussierung ist besonders komplex. Bei der vorliegenden Erfindung kann eine Beabstandung und/oder Laserleistung des wenigstens einen Lasers optimal adjustiert werden, wobei der wenigstens eine Laser zudem vor Verunreinigungen geschützt werden kann.

Durch die wenigstens eine Prägung kann gewährleistet werden, dass ein Laserstrahl des wenigstens einen Lasers bei im Wesentlichen beliebigen konstruktiven Ausgestaltungen im Wesentlichen im rechten Winkel zur Verschweißung auf die Seitenwand auftreffbar ist. Über die wenigstens eine Prägung kann ein Maß an Reflexion von für die Schweißung vorgesehenes Laserlicht stark reduziert werden, wobei Erwärmungen abseits der wenigstens einen Laserschweißverbindung zudem effektiv gehemmt werden können.

Durch eine Erhöhung einer Energieaufnahme an der gewünschten Verschweißungsstelle kann Energie des wenigstens einen Lasers eingespart und Beschädigungen aufgrund mangelhafter Laserschweißverbindungen unterbunden werden.

Darüber hinaus kann der positive Effekt bedingt werden, dass die Seitenwand im Bereich der wenigstens einen Laserschweißverbindung belastbarer ist und auch höhere Belastungen auf eine Schubladenfrontwand oder Schubladenrückwand ermöglicht werden. Dies kann beispielsweise von Vorteil sein, wenn eine Neigungsverstellung einer Blende über eine Relingstange vermittelt wird, wobei Anwendungsbereiche wie Dimensionierungsoptimierungen breit gestreut sind.

Im Allgemeinen kann die wenigstens eine Prägung im Zuge der Laserschweißverbindung vollständig weggeschmolzen werden, wobei die wenigstens eine Prägung bevorzugt lediglich partiell aufgeschmolzen wird. Mit anderen Worten kann um die wenigstens eine Laserschweißverbindung ein Randbereich an Prägung verbleiben, um zum Beispiel eine Ausrichtung des wenigstens einen Lasers mit reduzierter Genauigkeit vornehmen zu können und/oder unerwünschte Reflexionseffekte im Randbereich der Prägung ausschließen zu können.

Wie eingangs ausgeführt, wird Schutz auch begehrt für eine Seitenwand für eine Schublade, umfassend wenigstens ein Trägerprofil und wenigstens ein Hohlprofil, wobei das wenigstens eine Trägerprofil und das wenigstens eine Hohlprofil zumindest abschnittsweise aus einem metallischen Werkstoff gebildet und miteinander mittels wenigstens einer Laserschweißverbindung verschweißt sind, wobei das wenigstens eine Trägerprofil und/oder das wenigstens eine Hohlprofil in einem Bereich und/oder um den Bereich der wenigstens einen Laserschweißverbindung wenigstens eine Prägung zur Erhöhung einer Energieaufnahme von Laserlicht wenigstens eines Lasers zur Bildung der wenigstens einen Laserschweißverbindung umfasst.

Die wenigstens eine Prägung kann beispielsweise als, vorzugsweise automatisch aufzunehmender und/oder über ein Kamerasystem aufzunehmender, Indikator für eine vorgesehene Position der wenigstens einen Laserschweißverbindung genutzt werden.

Eine Anzahl an Prägungen und/oder Positionierungen der wenigstens einen Prägung kann in Abhängigkeit von Parametern der Seitenwand wie Belastbarkeit, Dimensionierung et cetera angepasst werden.

Das wenigstens eine Trägerprofil kann in Form einer Behältnisschiene vorliegen, welche im Allgemeinen zur Verbindung der Seitenwand mit einem Schubladenboden genutzt werden kann.

Das wenigstens eine Hohlprofil kann in Form eines Zargenhuts vorliegen, welcher im Allgemeinen zur zumindest bereichsweisen Anordnung wenigstens einer Haltevorrichtung für eine Schubladenrückwand oder eine Schubladenfrontwand innerhalb des wenigstens einen Hohlprofils verwendet werden kann.

Die Seitenwand liegt besonders bevorzugt als Schubladenseitenwand, Behältnisseitenwand oder dergleichen vor. Bevorzugt ist eine Schublade mit einer Schubladenfrontwand, einer Schubladenrückwand, einem Schubladenboden und zwei solchen Seitenwänden, wobei Haltevorrichtungen zur Befestigung der Schubladenfrontwand und/oder der Schubladenrückwand an den Seitenwänden vorgesehen sind.

Bevorzugt wird in einem vorbereitenden Verfahrensschritt das wenigstens eine Trägerprofil und/oder das wenigstens eine Hohlprofil, vorzugsweise über walzen und/oder biegen, bereitgestellt.

Wie eingangs ausgeführt, wird Schutz auch begehrt für ein Trägerprofil für eine solche Seitenwand, wobei das Trägerprofil zumindest abschnittsweise aus einem metallischen Werkstoff gebildet ist, dadurch gekennzeichnet, dass das Trägerprofil, insbesondere an einer einem Innenraum des Trägerprofils zugewandten Innenseite und/oder an zumindest einem im Gebrauchszustand des Trägerprofils in vertikale Richtung weisenden seitlichen Steg, wenigstens eine Prägung zur Erhöhung einer Energieaufnahme von Laserlicht wenigstens eines Lasers zur Bildung wenigstens einer Laserschweißverbindung mit wenigstens einem Hohlprofil umfasst.

Beispielsweise können Prägungen entlang des seitlichen Stegs und/oder am seitlichen Steg an der Innenseite und/oder an beiden seitlichen, vorzugsweise parallel zueinander ausgerichteten, Stegen des Trägerprofils und/oder des Hohlprofilsangeordnet sein.

Wie eingangs ausgeführt, wird Schutz auch begehrt für eine Anordnung aus zumindest einem Laser und zumindest einer solchen Seitenwand, wobei der zumindest eine Laser zur Einbringung der wenigstens einen Laserschweißverbindung, insbesondere in einem solchen Verfahren, mit einer Laseremissionsöffnung in einem spitzen Winkel, vorzugsweise 15° bis 30°, besonders bevorzugt 20° bis 25°, auf eine im Gebrauchszustand der zumindest einen Seitenwand vertikale Richtung ausgerichtet ist, sodass Laserlicht, insbesondere unmittelbar, im Wesentlichen im rechten Winkel auf eine Flanke der wenigstens einen Prägung emittierbar ist.

Dadurch kann die positive Eigenschaft gewährleistet werden, dass der wenigstens eine Laser nicht näher an die Seitenwand manövriert werden muss, keine von für die Möbelbranche herkömmlichen Materialien abweichenden materialspezifischen Charakteristika zur Erhöhung eines Energieeintrags an der Verschweißungsstelle vorgesehen werden müssen.

Insbesondere bei schmalen Seitenwänden oder Trägerprofilen ist eine Verbindung über Nieten nicht möglich, wobei beispielsweise ein Scheibenlaser zum Verschweißen des Trägerprofils herangezogen werden kann.

Eine Beabstandung zwischen Laser und Seitenwand im Zuge der Schweißung liegt bevorzugt im Bereich zwischen 5 cm und 50 cm, besonders bevorzugt zwischen 10 cm und 40 cm, weiter bevorzugt zwischen 15 cm und 25 cm.

Vorteilhafte Ausführungsformen der Erfindung sind in den abhängigen Ansprüchen definiert.

Besonders bevorzugt ist vorgesehen, dass vor dem Schweißen die wenigstens eine Prägung zur Erhöhung einer Energieaufnahme von Laserlicht in einem Bereich und/oder um den Bereich der wenigstens einen Laserschweißverbindung an dem wenigstens einen Trägerprofil und/oder dem wenigstens einen Hohlprofil angeordnet wird.

Da die wenigstens eine Prägung ein konstruktives Element der Seitenwand darstellt, sind keine Änderungen an dem wenigstens einen Laser wie Fokusbreite, Intensität, Pulsdauer, Bestrahlungsdauer oder dergleichen vorgenommen werden können. Eine Anwendung bei unterschiedlichsten Lasern mit jeweiligen Dimensionierungen und Eigenschaften ist möglich.

Gemäß einer vorteilhaften Ausgestaltung der Erfindung ist vorgesehen, dass die wenigstens eine Prägung an einer einem Innenraum des wenigstens einen Trägerprofils zugewandten Innenseite, vorzugsweise an zumindest einem im Gebrauchszustand der Seitenwand in vertikale Richtung weisenden seitlichen Steg, des wenigstens einen Trägerprofils angeordnet wird.

Bei Laserschweißverbindungen, welche in einen Außenraum weisen, ist eine Zugänglichkeit des wenigstens einen Lasers weniger problematisch, wenngleich auch hier eine besonders vorteilhafte Eingliederung in einen Produktionszyklus gewährleistet werden kann. Durch wenigstens eine Prägung im Innenraum kann auch die Problematik der Zugänglichkeit des wenigstens einen Lasers ohne komplexe Aufbauten (wie Spiegel oder geteilte Profile) überwunden werden.

Es ist vorgesehen, dass die wenigstens eine Prägung derart in das wenigstens eine Trägerprofil und/oder das wenigstens eine Hohlprofil eingebracht wird beziehungsweise ist, dass die wenigstens eine Prägung in Form einer Riffelung vorliegt.

Vorteilhafter Weise ist vorgesehen, dass zumindest zwei, vorzugsweise genau drei, Prägungen vorgesehen sind und/oder die wenigstens eine Prägung derart in das wenigstens eine Trägerprofil und/oder das wenigstens eine Hohlprofil eingebracht wird, dass die wenigstens eine Prägung
- in Form einer wellenförmigen Riffelung vorliegt und/oder in Form einer Riffelung mit zumindest zwei, besonders bevorzugt zumindest fünf, weiter besonders bevorzugt zehn, Erhebungen, vorliegt und/oder
- einen im Wesentlichen rechteckigen Querschnitt aufweist und/oder lokal angeordnet ist und/oder
- entlang einer Längsrichtung der Seitenwand im Bereich eines freien Endes, vorzugsweise im Abstand von zumindest dem Fünffachen einer Materialstärke des wenigstens einen Trägerprofils, und/oder zentral angeordnet ist und/oder
- orthogonal auf die Längsrichtung von einem freien Ende im Abstand von zumindest einem Zehnfachen der Materialstärke des Trägerprofils und/oder ausgehend von einer im Gebrauchszustand der Seitenwand angeordneten Oberseite des wenigstens einen Trägerprofils im ersten Drittel entlang eines seitlichen Stegs des wenigstens einen Trägerprofils angeordnet ist und/oder
- im Gebrauchszustand der Seitenwand an einem seitlichen Steg des wenigstens einen Trägerprofils und/oder des wenigstens einen Hohlprofils angeordnet ist und/oder
- zumindest ein Fünftel und/oder maximal eine Hälfte der Materialstärke des wenigstens einen Trägerprofils tief ist und/oder
- an einer der wenigstens einen Prägung abgewandten Seite des Materials einen, vorzugsweise im Wesentlichen flächigen, Anlagebereich für das wenigstens eine Hohlprofil und/oder das wenigstens eine Trägerprofil bildet.

Charakteristika der wenigstens einen Prägung wie Tiefe, Geometrie, Form und/oder Positionierung an der Seitenwand kann individuell an die Gegebenheiten und/oder Anforderungen der Seitenwand angepasst werden. Eine Materialstärke kann bei wechselnden Materialstärken zum Beispiel über eine mittlere oder maximale Materialstärke definiert werden. Freie Enden liegen im Allgemeinen sowohl für das wenigstens eine Trägerprofil als auch für das wenigstens eine Hohlprofil in vertikaler Richtung (beispielsweise als maximale Entfernung entlang dieses Freiheitsgrades) und in Längsrichtung vor.

Als günstig hat sich erwiesen, dass die Erhebungen jeweils zwei, vorzugsweise spitz aufeinander zulaufende, Flanken aufweisen,
- welche einen Winkel im Bereich zwischen 70° und 110°, vorzugsweise im Wesentlichen einen rechten Winkel, zueinander einschließen und/oder
- wobei eine der beiden Flanken derart relativ zu dem wenigstens einen Trägerprofil und/oder dem wenigstens einen Hohlprofil orientiert wird, dass eine Normale auf die Flanke kontaktlos zwischen zwei seitlichen Stegen des wenigstens einen Trägerprofils und/oder des wenigstens einen Hohlprofils von der Seitenwand wegführt und/oder
- wobei die beiden Flanken eine Flankenhöhe im Bereich zwischen 0,05 mm und 0,2 mm, vorzugsweise zwischen 0,1 mm und 0,15 mm, und/oder zumindest eine der beiden Flanken eine Flankenlänge zwischen 0,1 mm und 0,25 mm, vorzugsweise zwischen 0,15 mm und 0,2 mm, aufweisen und/oder
- wobei die Erhebungen einen Flankenwinkel zwischen 15° und 40°, vorzugsweise zwischen 25° und 30°, relativ zu einem seitlichen Steg des wenigstens einen Trägerprofils und/oder des wenigstens einen Hohlprofils aufweisen und/oder zwei benachbarte Erhebungen zwischen 0,2 mm und 0,5 mm, vorzugsweise zwischen 0,3 mm und 0,4 mm, voneinander beabstandet sind.

Eigenschaften der wenigstens einen Prägung wie Geometrie und/oder Ausrichtung der Flanken kann von dem Laserlicht des wenigstens einen Lasers und/oder Dimensionierungen von Bauteilen der Seitenwand bestimmt werden, um einen Fertigungsprozess der Seitenwand besonders effizient zu gestalten.

Gemäß einer vorteilhaften Ausführungsform der Erfindung ist vorgesehen, dass die wenigstens eine Laserschweißverbindung in Form einer Punkt- oder Linienlaserschweißverbindung eingebracht wird.

Besonders bevorzugt sind punktartige Schweißstellen, welche sich zumindest bereichsweise innerhalb einer seitlichen Ausdehnung der wenigstens einen Prägung hinweg erstrecken.

Als vorteilhaft hat sich erwiesen, dass an dem wenigstens einen Trägerprofil und/oder dem wenigstens einem Hohlprofil, vorzugsweise im Bereich der wenigstens einen Prägung, wenigstens eine Beschichtung, vorzugsweise Kunststoffbeschichtung, aufgebracht wird, welche vor oder im Zuge der Schweißung, vorzugsweise mit dem wenigstens einen Laser und/oder bereichsweise, abgetragen wird.

Die wenigstens eine Beschichtung kann beispielsweise für ein spezifisches visuelles Erscheinungsbild der Seitenwand vorgesehen sein, wobei die wenigstens eine Beschichtung gegebenenfalls für die wenigstens eine Laserschweißverbindung unerwünscht ist, und/oder - beispielsweise über Zusammensetzung und/oder Farbgebung - eine Absorption an Laserlicht zumindest temporär zu Beginn der Schweißung erhöhen.

Ein Abdampfen oder Abtragen der wenigstens einen Beschichtung vor der Schweißung mit dem wenigstens einen Laser kann eine Menge an für die Verschweißung abträglichen Stoffen wie organisches Substrat und/oder Schadstoffe reduzieren oder tilgen.

Eine vorteilhafte Variante besteht darin, dass der wenigstens eine Laser zur Einbringung der wenigstens einen Laserschweißverbindung mit einer Laseremissionsöffnung in einem spitzen Winkel, vorzugsweise 15° bis 30°, besonders bevorzugt 20° bis 25°, auf eine im Gebrauchszustand der Seitenwand vertikale Richtung orientiert wird, wobei vorzugsweise vorgesehen ist, dass Laserlicht im Wesentlichen im rechten Winkel auf eine der beiden gegebenenfalls vorhandenen Flanken der wenigstens einen Prägung emittiert wird.

Besonders bevorzugt ist vorgesehen, dass wenigstens eine zumindest abschnittsweise aus einem metallischen Werkstoff gebildete Haltevorrichtung zur Verbindung der Seitenwand mit einer Schubladenrückwand oder einer Schubladenfrontwand bereitgestellt wird, wobei die wenigstens eine Haltevorrichtung mit dem wenigstens einen Trägerprofil mittels wenigstens einer Laserschweißnaht verschweißt wird und im Bereich der wenigstens einen Laserschweißnaht durch Bestrahlung mit Laserlicht eine von der wenigstens einen Laserschweißnaht gesonderte Laserverformung hervorgerufen wird.

Dadurch kann im Bereich der Verschweißung noch eine zusätzliche Laserbehandlung durchgeführt werden, um die Seitenwand zum einen stabiler zu gestalten und zum anderen einem Abreißen der wenigstens einen Haltevorrichtung entgegenzuwirken.

Mit anderen Worten wird im Zuge der Schweißoperation für die Befestigung der wenigstens einen Haltevorrichtung noch zusätzlich mit Hilfe wenigstens eines Lasers Wärme in das wenigstens eine Trägerprofil eingebracht. Dies führt dazu, dass sich das wenigstens eine Trägerprofil leicht verformt und nach oben biegt. Es werden also gezielt Spannungen in dem wenigstens einen Trägerprofil erzeugt, die eine bevorzugte Verformung zur Folge haben.

Bei bestimmten Materialqualitäten kann es auch zu Gefüge-Veränderungen und dadurch zu einem, Härteprozess kommen.

Durch die zusätzliche Laserbehandlung ist das wenigstens eine Trägerprofil stärker belastbar, wodurch höhere Belastungen auf die mit der wenigstens einen Haltevorrichtung verbundene Schubladenrückwand oder Schubladenfrontwand möglich sind. Dies ist zum Beispiel dann von Vorteil, wenn die Neigungsverstellung der Schubladenfrontwand über die Relingstange realisiert wird.

Bei einem bevorzugten Ausführungsbeispiel der Erfindung ist vorgesehen, dass
- die wenigstens eine Laserschweißnaht zu einem überwiegenden Teil an Stellen des wenigstens einen Trägerprofils angeordnet wird, an denen sich die wenigstens eine Haltevorrichtung und das wenigstens eine Trägerprofil kontaktieren, und/oder
- die wenigstens eine Laserverformung zu einem überwiegenden Teil an Stellen des wenigstens einen Trägerprofils angeordnet wird, an denen sich die wenigstens eine Haltevorrichtung und das wenigstens eine Trägerprofil nicht kontaktieren, und/oder
- die wenigstens eine Laserverformung versetzt zu der wenigstens einen Laserschweißnaht an dem wenigstens einen Trägerprofil angeordnet wird, und/oder
- die wenigstens eine Laserverformung und die wenigstens eine Laserschweißnaht derart relativ zueinander angeordnet werden, dass die Laserverformung und die wenigstens eine Laserschweißnaht wenigstens einen Schnittpunkt aufweisen, und/oder dass sich die wenigstens eine Laserverformung in eine Richtung quer zu einer Längsrichtung der Seitenwand über eine größere Breite erstreckt als die wenigstens eine Laserschweißnaht, und/oder
- die wenigstens eine Laserverformung zumindest abschnittsweise linienförmig in Form eines Zick-Zacks ausgebildet wird, und/oder
- die wenigstens eine Laserschweißnaht und die wenigstens eine Laserverformung mit demselben Laser erzeugt werden, wobei der Fokus des Lasers nach der Erzeugung der wenigstens einen Laserschweißnaht und vor der Erzeugung der wenigstens eine Laserverformung verstellt, vorzugsweise aufgeweitet, wird.

Im Allgemeinen kann auch für die wenigstens eine Laserschweißverbindung und die wenigstens eine Laserschweißnaht selbiger Laser herangezogen werden, wobei der Laser sequentiell die zu behandelnden Stellen der Seitenwand abarbeitet. Im Allgemeinen können für die einzelnen Wärmebehandlungen zumindest partiell auch unterschiedliche Laser oder eine Vielzahl an gleichartigen Lasern genutzt werden - zum Beispiel für variierende Positionen entlang der Seitenwand.

Besonders bevorzugt ist vorgesehen, dass die wenigstens eine Laserschweißnaht und die wenigstens eine Laserverformung zumindest abschnittsweise linienförmig ausgebildet sind, und wobei die wenigstens eine Laserschweißnaht und die Laserverformung eine unterschiedliche Linienbreite aufweisen, vorzugsweise wobei die Laserverformung eine größere Linienbreite als die wenigstens eine Laserschweißnaht aufweist.

Mutatis mutandis kann die Seitenwand die konstruktiven beziehungsweise strukturellen Merkmale der Verfahrensansprüche aufweisen, wobei Merkmale der Vorrichtungsansprüche der Seitenwand in analoger Weise bei den Verfahrensansprüchen anwendbar sind.

Weitere Einzelheiten und Vorteile der vorliegenden Erfindung werden anhand der Figurenbeschreibung unter Bezugnahme auf die in den Zeichnungen dargestellten Ausführungsbeispiele im Folgenden näher erläutert. Darin zeigen:
- Fig. 1a, 1b: eine Seitenwand gemäß einem besonders bevorzugten Ausführungsbeispiel in zwei perspektivischen Ansichten variierender Blickwinkel auf eine Prägung in einem Trägerprofil,
- Fig. 1c, 1d: die Seitenwand gemäß der Ausführungsform nach Fig. 1a mit vergrößertem Detailausschnitt im Bereich der Prägung in perspektivischer Ansicht,
- Fig. 2: das Trägerprofil der Seitenwand gemäß der Ausführungsform nach Fig. 1a isoliert von einem Hohlprofil in perspektivischer Ansicht,
- Fig. 3a, 3b: die Seitenwand gemäß der Ausführungsform nach Fig. 1a in einer Ansicht von der Seite mit vergrößerter Schnittdarstellung sowie vergrößerter Detaildarstellung im Bereich der Prägung,
- Fig. 3c, 3d: die Seitenwand gemäß der Ausführungsform nach Fig. 3a während einer Bestrahlung der Prägung über einen Laser zur Bildung einer Laserschweißverbindung sowie einem vergrößertem Detailausschnitt der Prägung,
- Fig. 4a-4d: eine Seitenwand gemäß einem weiteren bevorzugten Ausführungsbeispiel in einer Ansicht von unten mit drei vergrößerten Detailausschnitten im Bereich einer Laserschweißnaht.

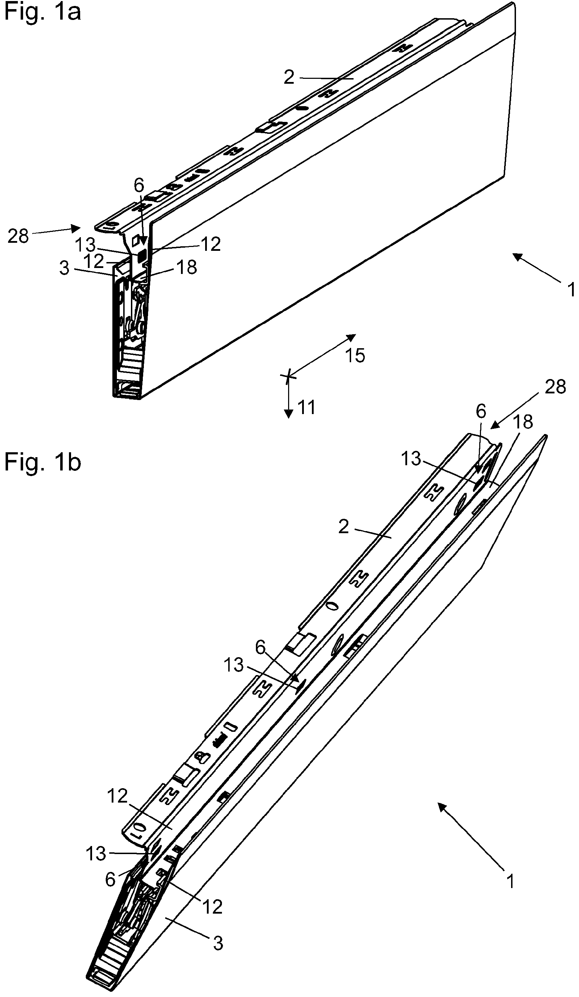

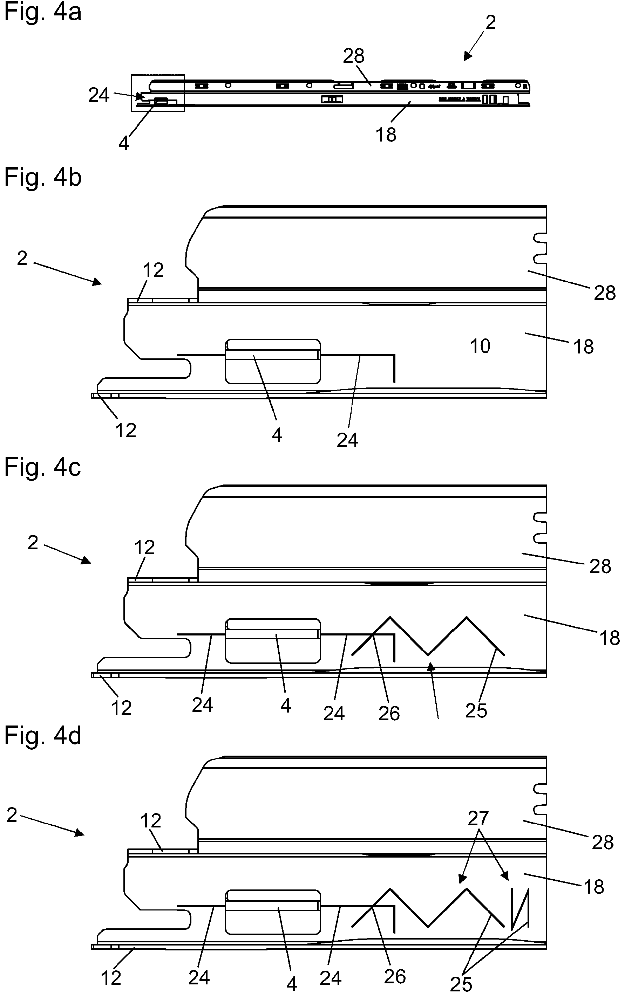

Fig. 1a zeigt eine Seitenwand 1 für eine Schublade, umfassend ein Trägerprofil 2 in Form einer Behältnisschiene zur Verbindung der Seitenwand mit einem Schubladenboden und ein Hohlprofil 3 in Form eines Zargenhuts zur Anordnung von Haltevorrichtungen 4 für eine Schubladenrückwand und eine Schubladenfrontwand innerhalb des Hohlprofils 3 (vgl. Fig. 4b-4d).

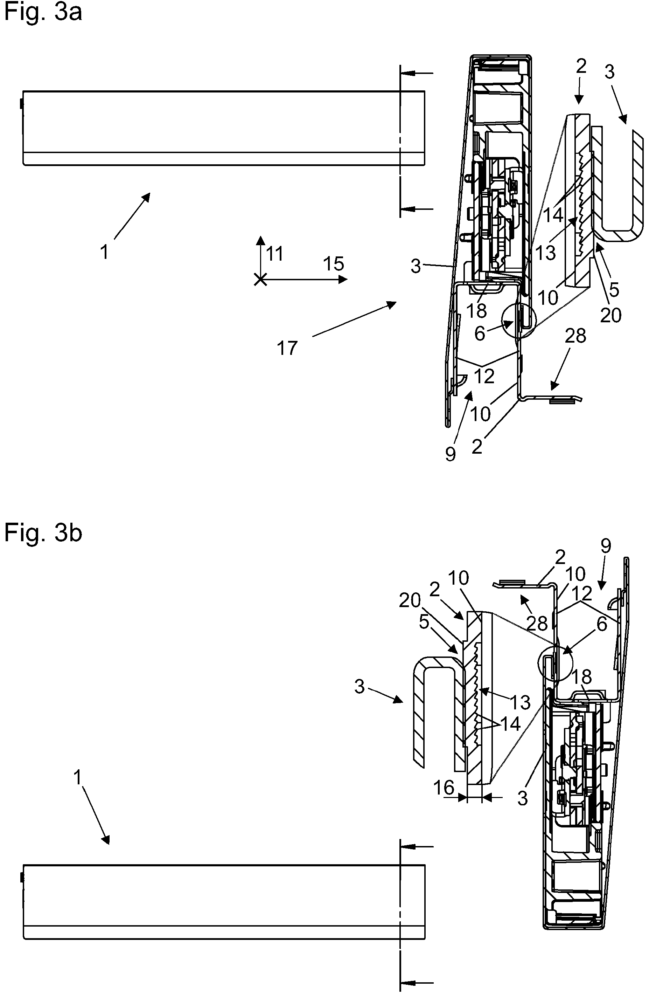

Das Trägerprofil 2 und das Hohlprofil 3 wurden zumindest abschnittsweise einen metallischen Werkstoff beinhaltend bereitgestellt, um miteinander mittels einer Laserschweißverbindung 5 verschweißt zu werden. Um eine Qualität der Laserschweißverbindung 5 (siehe Fig. 3a-3d) zu verbessern, umfasst das Trägerprofil 2 in und um einem Bereich der an der Seitenwand 1 anzubringenden Laserschweißverbindung 5 eine Vielzahl an Prägungen 6 zur Erhöhung einer Energieaufnahme von Laserlicht 7 eines Lasers 8 zur Bildung der Laserschweißverbindung 5.

Die Prägungen 6 sind an dem Trägerprofil 2 angeordnet. Alternativ oder in Ergänzung können Prägungen 6 an dem Hohlprofil 3 angeordnet sein.

Fig. 1b unterscheidet sich von Fig. 1a lediglich dahingehend, dass die Seitenwand 1 von geänderter Blickrichtung betrachtet wird, wobei ersichtlich ist, dass genau drei Prägungen 6 vorgesehen sind. Im Allgemeinen ist die Anzahl an Prägungen 6 beliebig, wobei beispielsweise auch weitere Prägungen 6 gegenüberliegend an dem Trägerprofil 2 (oder dem Hohlprofil 3) angeordnet sein können.

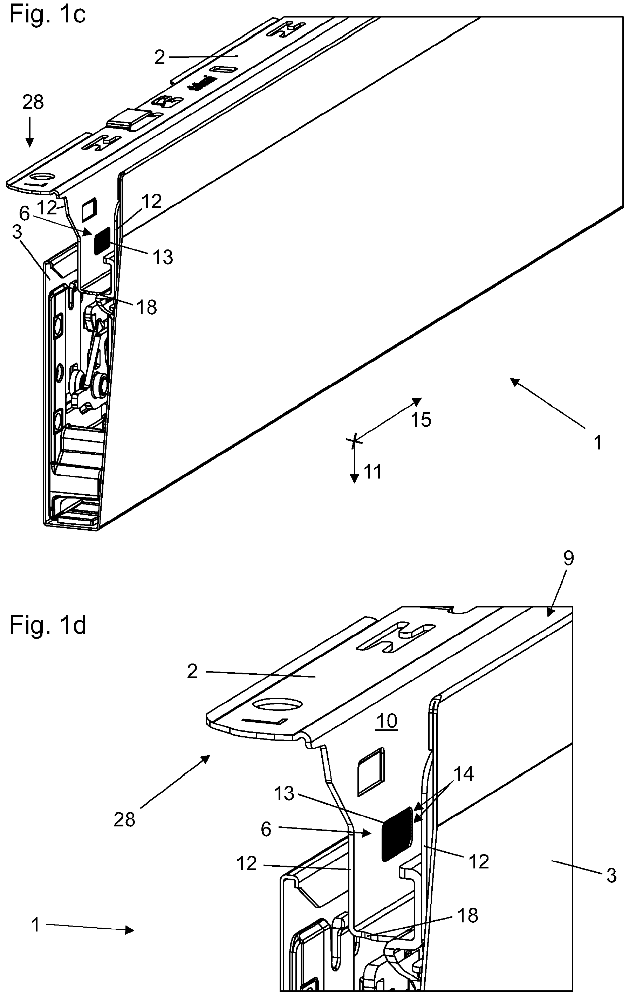

Fig. 1c zeigt ein freies Ende des Trägerprofils 2 in Längsrichtung 15 der Seitenwand 1 sowie freie Enden des Trägerprofils 2 - gebildet durch eine im Gebrauchszustand 17 der Seitenwand angeordnete Oberseite 18 sowie eine gegenüberliegende Unterkante des Trägerprofils 2 - in vertikaler Richtung 11 der Seitenwand 1.

Entlang der Längsrichtung 15 der Seitenwand 1 sind Prägungen 6 im Bereich des freien Endes im Abstand von mindestens dem Fünffachen einer Materialstärke 16 des Trägerprofils 2 sowie mittig am Trägerprofil 2 (in der Darstellung verdeckt) angeordnet. Orthogonal auf die Längsrichtung 15 sind die Prägungen 6 von der im Gebrauchszustand 17 gebildeten Unterkante des seitlichen Stegs 12 des Trägerprofils 2 im Abstand von mindestens einem Zehnfachen der Materialstärke 16 des Trägerprofils 2 und ausgehend von der im Gebrauchszustand 17 der Seitenwand 1 angeordneten Oberseite 18 des Trägerprofils 2 im ersten Drittel entlang eines seitlichen Stegs 12 des Trägerprofils 2 angeordnet.

Das Trägerprofil 2 weist einen parallel zu dem seitlichen Steg 12 ausgerichteten weiteren seitlichen Steg 12 auf. Die Prägung 2 ist in vertikaler Richtung 11 näher an der Oberseite 18 lokalisiert als an der Unterkante des Trägerprofils, weshalb aufgrund der baulichen Größen der Seitenwand eine Laserschweißverbindung 5 ohne Prägung 6 aufwändig und schwierig zu generieren ist.

Die Prägungen 6 sind derart in dem Trägerprofil 2 (ggf. auch in dem Hohlprofil 3 möglich) eingebracht, sodass die Prägungen 6 einen rechteckigen Querschnitt mit abgerundeten Ecken aufweisen, an einem lokalen Bereich der Seitenwand angeordnet sind und im Gebrauchszustand 17 der Seitenwand 1 an dem seitlichen Steg 12 des Trägerprofils 2 positioniert sind.

Fig. 1d zeigt einen Ausschnitt der Seitenwand 1 im Bereich einer Prägung 6 vergrößert dargestellt. Die Prägungen 6 sind an einer einem Innenraum 9 des Trägerprofils 2 zugewandten Innenseite 10 - an dem im Gebrauchszustand 17 der Seitenwand 1 in vertikale Richtung 11 weisenden seitlichen Steg 12 - des Trägerprofils 2 angeordnet.

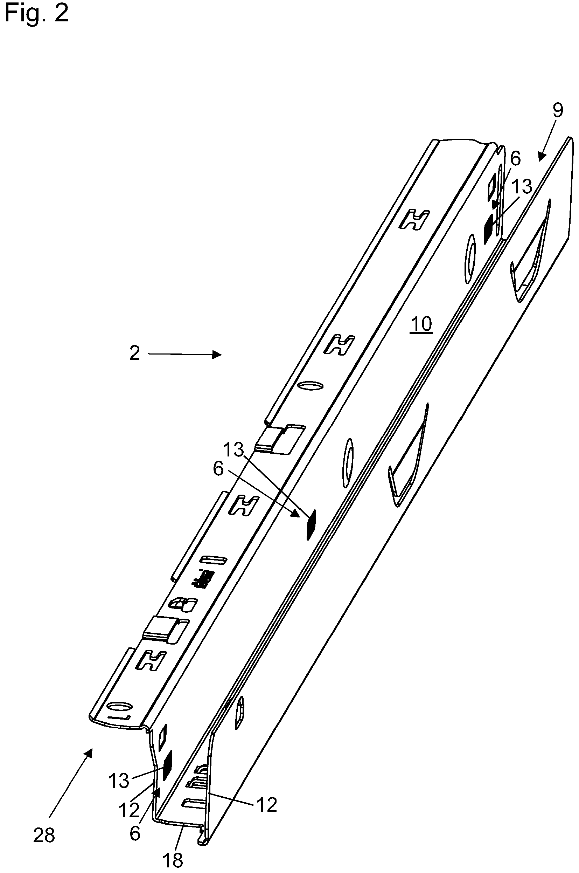

Fig. 2 zeigt eine besonders bevorzugte Ausführungsform des Trägerprofils 2 für die Seitenwand 1, wobei das Trägerprofil 2 aus Metall besteht und die Prägungen 6 an der dem Innenraum 9 des Trägerprofils 2 zugewandten Innenseite 10 sowie an dem im Gebrauchszustand des Trägerprofils 2 in vertikale Richtung 11 weisenden seitlichen Steg 12 angeordnet sind, um die Energieaufnahme von Laserlicht 7 eines Lasers 8 zur Bildung von Laserschweißverbindungen 5 mit dem Hohlprofil 3 zu steigern.

Das Trägerprofil 2 weist einen Quersteg 28 auf, welcher orthogonal auf beide seitliche Stege 12 des Trägerprofils 2 sowie in einem an dem Hohlprofil 3 montierten Zustand beide seitliche Stege 12 des Hohlprofils 3 ausgerichtet ist.

Fig. 3a zeigt eine Seitenansicht der Seitenwand 1 mit Schnittdarstellung durch die Seitenwand und vergrößerter Detailansicht im Bereich einer Prägung 6 beziehungsweise Laserschweißverbindung 5.

Die Laserschweißverbindung 5 ist schematisch dargestellt, wobei zu Veranschaulichungszwecken die Prägung 6 im Querschnitt vollständig erhalten dargestellt ist - dies ist im Allgemeinen im Bereich der Laserschweißverbindung 5 aufgrund eines Aufschmelzvorgangs von Material nicht vorgesehen.

Die Laserschweißverbindung 5 als stoffschlüssige Verbindung kann mit anderweitigen Befestigungsverbindungen zwischen Trägerprofil 2 und Hohlprofil 3 kombiniert werden. Beispielsweise können Schraub-, Nagel-, Klemm-, Formschlussverbindungen oder dergleichen herangezogen werden.

Die Seitenwand 1 ist in Gebrauchsstellung 17 zur Anbindung an weitere Bauteilkomponenten einer Schublade orientiert.

Fig. 3b unterscheidet sich von Fig. 3a lediglich dahingehend, dass die Seitenwand 1 um 180° gedreht wurde. Eine derartige Ausrichtung kann für die Montage der Seitenwand 1 genutzt werden, wobei die Laserschweißverbindung 5 dadurch generiert wird, dass von oben auf die im Innenraum 9 und zwischen den beiden seitlichen Stegen 12 positionierte Prägung 6 Laserlicht 7 emittiert wird. Die Ausrichtung der Seitenwand 1 während eines Fertigungsprozesses ist jedoch im Allgemeinen beliebig.

Die Prägung 6 ist zwischen einem Fünftel und einer Hälfte der Materialstärke 16 des Trägerprofils 2 tief.

Die Prägung 6 liegt in Form einer wellenförmigen Riffelung 13 vor, wobei die Riffelung 13 eine Vielzahl an Erhebungen 14 aufweist.

An einer der Prägung 6 abgewandten Seite des Materials des Trägerprofils 2 wird durch die Prägung 6 ein Anlagebereich 20 gebildet, welcher zur linienförmigen oder flächigen Kontaktierung zwischen dem seitlichen Steg 12 des Trägerprofils 2 und einem seitlichen Steg des Hohlprofils 3 zur definierten Anlage für die Laserschweißverbindung 5 genutzt werden kann.

Die Laserschweißverbindung 5 kann zum Beispiel in Form einer Punkt- oder Linienlaserschweißnaht vorliegt.

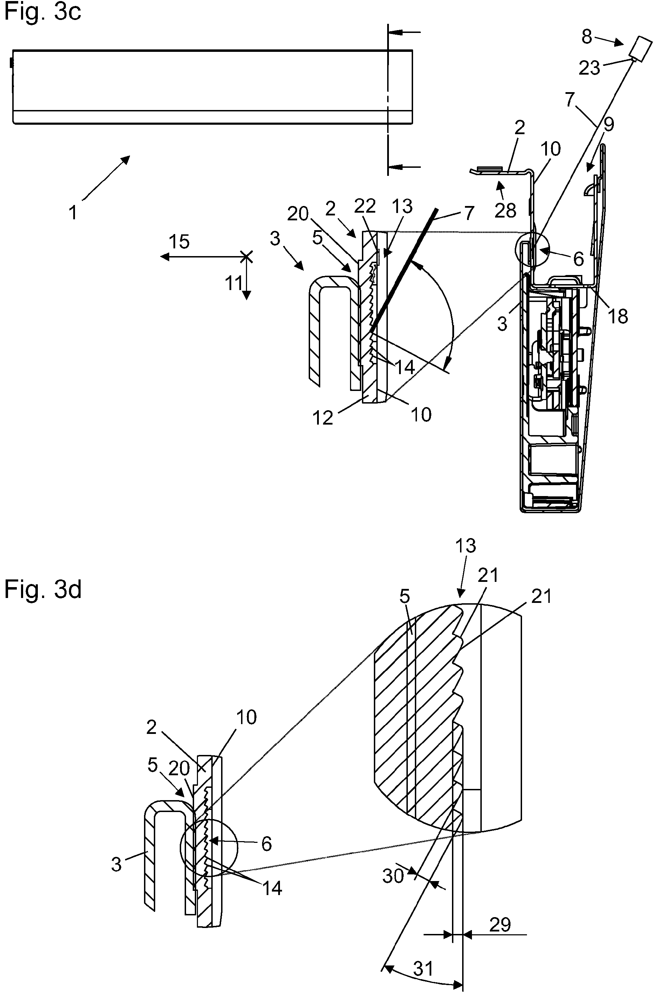

Fig. 3c zeigt eine Anordnung aus einem Laser 8 und der Seitenwand 1, wobei der Laser 8 (die Anzahl ist im Allgemeinen beliebig) zur Einbringung der Laserschweißverbindung 5 mit einer Laseremissionsöffnung 23 in einem spitzen Winkel zwischen 20° und 25° auf die vertikale Richtung 11 orientiert ist, sodass das Laserlicht 7 des Lasers 8 direkt im rechten Winkel auf Flanken 21 (siehe Fig. 3d) der Prägung 6 emittierbar ist.

Ein Verfahren zur Herstellung der Seitenwand 1 kann wie folgt exemplarisch dargestellt werden: Das metallische Trägerprofil 2 und das metallische Hohlprofil 3 werden bereitgestellt, wobei die Prägungen 6 zur Erhöhung der Energieaufnahme von Laserlicht 7 vor einem Schweißprozess in einem Bereich und um den Bereich der Laserschweißverbindung 5 an dem Trägerprofil 2 angeordnet wird, sodass das Trägerprofil 2 und das Hohlprofil 3 anschließend miteinander mittels Laserschweißverbindungen 5 über die Prägungen 6 verschweißt werden, wobei zumindest das Trägerprofil 2 vor dem Schweißen Prägungen 6 aufweist und die Prägungen 6 im Zuge des Schweißens zumindest bereichsweise aufgeschmolzen wird.

An dem Trägerprofil 2 oder dem Hohlprofil 3 kann im Bereich der Prägungen 6 eine Beschichtung 22 in Form einer Kunststoffbeschichtung aufgebracht sein, welche vor oder im Zuge der Schweißung mit dem Laser 8 zumindest bereichsweise abgetragen wird.

Der Laser 8 wurde zur Einbringung der Laserschweißverbindung 5 mit der Laseremissionsöffnung 23 bereits im spitzen Winkel zu den Innenseiten 10 des Trägerprofils 2 orientiert, wobei Laserlicht 7 im rechten Winkel auf eine der beiden durch die Prägung 6 gebildeten Flanken 21 der Prägung 6 zum Aufschmelzen von metallischem Material emittiert wird.

Fig. 3d zeigt eine Prägung 6 für eine Laserschweißverbindung 5 vergrößert dargestellt, wobei ersichtlich ist, dass die Erhebungen 14 der Riffelung 13 jeweils zwei spitz aufeinander zulaufende Flanken 21 aufweisen. Ein fertigungsbedingter Radius im Übergangsbereich der Flanken 21 ist im Allgemeinen beliebig.

Die Flanken 21 der Riffelung 13 schließen einen rechten Winkel zueinander ein, wobei die die Erhebungen 14 der Prägung 6 einen Flankenwinkel 31 von 28 ° relativ zu dem seitlichen Steg 12 des Trägerprofils 2 aufweisen. Die Erhebungen 14 sind mit dessen Flanken 21 schräggestellt, wobei zwei benachbarte Erhebungen 14 0,36 mm voneinander beabstandet sind.

Die beiden Flanken 21 bilden eine Flankenhöhe 29 von 0,125 **mm.** Die beiden Flanken 21 einer Erhebung 14 weisen unterschiedliche Flankenlängen 30 auf, wobei eine Flanke 21 eine Flankenlänge 30 von 0,17 mm aufweist.

Wie in Fig. 3c ersichtlich, ist jeweils eine der beiden Flanken 21 derart relativ zu dem seitlichen Stegen 12 des Trägerprofils 2 orientiert, dass eine Normale auf diese Flanke 21 kontaktlos zwischen den beiden seitlichen Stegen 12 des Trägerprofils 2 von der Seitenwand 1 wegführt, um eine Laserschweißverbindung 5 über die Prägung 6 mit reduzierter Reflexion erwirken zu können.

In analoger konstruktiver Ausgestaltung können Prägungen 6 am Hohlprofil 3 vorgesehen sein.

Fig. 4a zeigt das Trägerprofil 2 der Seitenwand 1 von einer Unterseite in Richtung der Oberseite 18 als plattenförmiger Bestandteil des Trägerprofils 2. Ein strichlierter Bereich eines freien Endes des Trägerprofils 2 wird in Fig. 4b bis 4d in diversen Ausführungsbeispielen zur Anbindung oder Erhöhung einer Stabilität einer Haltevorrichtung 4 dargestellt.

Fig. 4b zeigt, dass die Haltevorrichtung 4 zur Verbindung der Seitenwand 1 mit einer Schubladenrückwand oder einer Schubladenfrontwand aus metallischem Werkstoff bereitgestellt wurde und am Trägerprofil 2 angeordnet wurde. Die Haltevorrichtung 4 ist mit dem Trägerprofil 2 mittels einer Laserschweißnaht 24 verschweißt.

Fig. 4c zeigt, dass die Verbindung zwischen Trägerprofil 2 und Haltevorrichtung 4 im Bereich der Laserschweißnaht 24 eine von der Laserschweißnaht 24 gesonderte sowie durch Laserlicht 7 hervorgerufene Laserverformung 25 aufweist.

Die Laserverformung 25 ist zu einem überwiegenden Teil an Stellen des Trägerprofils 2 angeordnet, an denen die Haltevorrichtung 4 und das Trägerprofil 2 kontaktlos zueinander ausgebildet sind.

Die Laserschweißnaht 24 und die Laserverformung 25 sind linienförmig ausgebildet, wobei die Laserschweißnaht 24 und die Laserverformung 25 eine unterschiedliche Linienbreite (im Zuge der Emission von Laserlicht 7 und nach Beendigung des Schweißvorgangs) aufweisen. Die Laserverformung 25 weist eine größere Linienbreite als die Laserschweißnaht 24 auf.

Die Laserverformung 25 erstreckt sich in eine Richtung quer zu einer Längsrichtung 15 der Seitenwand 1 über eine größere Breite als die Laserschweißnaht 24.

Die Laserverformung 25 ist linienförmig ausgebildet und liegt in Form eines Zick-Zacks 27 ausgestaltet vor.

Die Laserverformung 25 und die Laserschweißnaht 24 weisen einen gemeinsamen Schnittpunkt 26 auf.

Fig 4d zeigt, dass eine weitere Laserverformung 25 vorgesehen ist, welche versetzt zu der Laserschweißnaht 24 an dem Trägerprofil 2 angeordnet ist. Durch die Laserverformung 25 kann ein Härteprozess im Zuge der Bestrahlung mit Laserlicht 7 sowie eine Festigkeitserhöhung erwirkt werden.

Im Fertigungsprozess der Seitenwand 1 kann die metallisch bereitgestellte Haltevorrichtung 4 mit dem Trägerprofil 2 mittels einer Laserschweißnaht 24 oder einer Vielzahl an räumlich gesonderten oder miteinander verbundenen Laserschweißnähten 24 verschweißt werden, wobei im Bereich der Laserschweißnaht 24 durch Bestrahlung mit Laserlicht 7 eine von der Laserschweißnaht 24 gesonderte Laserverformung 25 hervorgerufen wird.

Die Laserschweißnaht 24, die Laserverformungen 25 sowie die Laserschweißverbindung 5 sind mit demselben Laser 8 erzeugt worden, wobei dies im Allgemeinen nicht zwingend erforderlich ist. Beispielsweise können auch lediglich die Laserschweißnaht 24 und die Laserverformung 25 mit einem Laser 8 generiert werden. Der Fokus des Lasers 8 nach der Erzeugung der Laserschweißnaht 24 und vor der Erzeugung der Laserverformung 25 wird in dieser Ausführungsform in Form einer Aufweitung des Fokus verstellt.

## Patentansprüche

1. Verfahren zur Herstellung einer Seitenwand (1) für eine Schublade, umfassend wenigstens ein zumindest abschnittsweise aus einem metallischen Werkstoff bestehendes Trägerprofil (2) und wenigstens ein zumindest abschnittsweise aus einem metallischen Werkstoff bestehendes Hohlprofil (3), wobei das wenigstens eine Trägerprofil (2) und das wenigstens eine Hohlprofil (3) miteinander mittels wenigstens einer Laserschweißverbindung (5) verschweißt werden, **gekennzeichnet dadurch, dass** das wenigstens eine Trägerprofil (2) und/oder das wenigstens eine Hohlprofil (3) vor dem Schweißen wenigstens eine Prägung (6) zur Erhöhung einer Energieaufnahme von Laserlicht (7) wenigstens eines Lasers (8) zur Bildung der wenigstens einen Laserschweißverbindung (5) in einem Bereich und/oder um den Bereich der wenigstens einen Laserschweißverbindung (5) aufweist und die wenigstens eine Prägung (6) im Zuge des Schweißens zumindest bereichsweise aufgeschmolzen wird, wobei die wenigstens eine Prägung (6) derart in das wenigstens eine Trägerprofil (2) und/oder das wenigstens eine Hohlprofil (3) eingebracht wird, dass die wenigstens eine Prägung (6) in Form einer Riffelung vorliegt.

2. Verfahren nach Anspruch 1, wobei
- vor dem Schweißen die wenigstens eine Prägung (6) zur Erhöhung der Energieaufnahme von Laserlicht (7) in einem Bereich und/oder um den Bereich der wenigstens einen Laserschweißverbindung (5) an dem wenigstens einen Trägerprofil (2) und/oder dem wenigstens einen Hohlprofil (3) angeordnet wird und/oder
- die wenigstens eine Prägung (6) an einer einem Innenraum (9) des wenigstens einen Trägerprofils (2) zugewandten Innenseite (10), vorzugsweise an zumindest einem im Gebrauchszustand der Seitenwand (1) in vertikale Richtung (11) weisenden seitlichen Steg (12), des wenigstens einen Trägerprofils (2) angeordnet wird.

3. Verfahren nach einem der vorangehenden Ansprüche, wobei zumindest zwei, vorzugsweise genau drei, Prägungen (6) vorgesehen sind dass die wenigstens eine Prägung (6)
- in Form einer wellenförmigen Riffelung (13) vorliegt und/oder in Form einer Riffelung (13) mit zumindest zwei, besonders bevorzugt zumindest fünf, weiter besonders bevorzugt zumindest zehn, Erhebungen (14), vorliegt und/oder
- einen im Wesentlichen rechteckigen Querschnitt aufweist und/oder lokal angeordnet ist und/oder
- entlang einer Längsrichtung (15) der Seitenwand (1) im Bereich eines freien Endes, vorzugsweise im Abstand von zumindest dem Fünffachen einer Materialstärke (16) des wenigstens einen Trägerprofils (2), und/oder zentral angeordnet ist und/oder
- orthogonal auf die Längsrichtung (15) von einem freien Ende im Abstand von zumindest einem Zehnfachen der Materialstärke (16) des Trägerprofils (2) und/oder ausgehend von einer im Gebrauchszustand (17) der Seitenwand (1) angeordneten Oberseite (18) des wenigstens einen Trägerprofils (2) im ersten Drittel entlang eines seitlichen Stegs (12) des wenigstens einen Trägerprofils (2) angeordnet ist und/oder
- im Gebrauchszustand (17) der Seitenwand (1) an einem seitlichen Steg (12) des wenigstens einen Trägerprofils (2) und/oder des wenigstens einen Hohlprofils (3) angeordnet ist und/oder
- zumindest ein Fünftel und/oder maximal eine Hälfte der Materialstärke (16) des wenigstens einen Trägerprofils (2) tief ist und/oder
- an einer der wenigstens einen Prägung (6) abgewandten Seite des Materials einen, vorzugsweise im Wesentlichen flächigen, Anlagebereich (20) für das wenigstens eine Hohlprofil (3) und/oder das wenigstens eine Trägerprofil (2) bildet.

4. Verfahren nach Anspruch **3,** wobei die Erhebungen (14) jeweils zwei, vorzugsweise spitz aufeinander zulaufende, Flanken (21) aufweisen,
- welche einen Winkel im Bereich zwischen 70° und 110°, vorzugsweise im Wesentlichen einen rechten Winkel, zueinander einschließen und/oder
- wobei eine der beiden Flanken (21) derart relativ zu dem wenigstens einen Trägerprofil (2) und/oder dem wenigstens einen Hohlprofil (3) orientiert wird, dass eine Normale auf die Flanke (21) kontaktlos zwischen zwei seitlichen Stegen (12) des wenigstens einen Trägerprofils (2) und/oder des wenigstens einen Hohlprofils (3) von der Seitenwand (1) wegführt und/oder
- wobei die beiden Flanken (21) eine Flankenhöhe (29) im Bereich zwischen 0,05 mm und 0,2 mm, vorzugsweise zwischen 0,1 mm und 0,15 mm, und/oder zumindest eine der beiden Flanken (21) eine Flankenlänge (30) zwischen 0,1 mm und 0,25 **mm,** vorzugsweise zwischen 0,15 mm und 0,2 mm, aufweisen und/oder
- wobei die Erhebungen (14) einen Flankenwinkel (31) zwischen 15° und 40°, vorzugsweise zwischen 25° und 30°, relativ zu einem seitlichen Steg (12) des wenigstens einen Trägerprofils (2) und/oder des wenigstens einen Hohlprofils (3) aufweisen und/oder zwei benachbarte Erhebungen (14) zwischen 0,2 mm und 0,5 mm, vorzugsweise zwischen 0,3 mm und 0,4 mm, voneinander beabstandet sind.

5. Verfahren nach einem der vorangehenden Ansprüche, wobei
- die wenigstens eine Laserschweißverbindung (5) in Form einer Punkt- oder Linienlaserschweißnaht eingebracht wird und/oder
- an dem wenigstens einen Trägerprofil (2) und/oder dem wenigstens einem Hohlprofil (3), vorzugsweise im Bereich der wenigstens einen Prägung (6), wenigstens eine Beschichtung (22), vorzugsweise Kunststoffbeschichtung, aufgebracht wird, welche vor oder im Zuge der Schweißung, vorzugsweise mit dem wenigstens einen Laser (8) und/oder bereichsweise, abgetragen wird.

6. Verfahren nach einem der vorangehenden Ansprüche, wobei der wenigstens eine Laser (8) zur Einbringung der wenigstens einen Laserschweißverbindung (5) mit einer Laseremissionsöffnung (23) in einem spitzen Winkel, vorzugsweise 15° bis 30°, besonders bevorzugt 20° bis 25°, auf eine im Gebrauchszustand (17) der Seitenwand (1) vertikale Richtung (11) orientiert wird, wobei vorzugsweise vorgesehen ist, dass Laserlicht (7) im Wesentlichen im rechten Winkel auf eine der beiden gegebenenfalls vorhandenen Flanken (21) der wenigstens einen Prägung (6) emittiert wird.

7. Verfahren nach einem der vorangehenden Ansprüche, wobei wenigstens eine zumindest abschnittsweise aus einem metallischen Werkstoff gebildete Haltevorrichtung (4) zur Verbindung der Seitenwand (1) mit einer Schubladenrückwand oder einer Schubladenfrontwand bereitgestellt wird, wobei die wenigstens eine Haltevorrichtung (4) mit dem wenigstens einen Trägerprofil (2) mittels wenigstens einer Laserschweißnaht (24) verschweißt wird und im Bereich der wenigstens einen Laserschweißnaht (24) durch Bestrahlung mit Laserlicht (7) eine von der wenigstens einen Laserschweißnaht (24) gesonderte Laserverformung (25) hervorgerufen wird.

8. Verfahren nach Anspruch 7, wobei
- die wenigstens eine Laserschweißnaht (24) zu einem überwiegenden Teil an Stellen des wenigstens einen Trägerprofils (2) angeordnet wird, an denen sich die wenigstens eine Haltevorrichtung (4) und das wenigstens eine Trägerprofil (2) kontaktieren, und/oder
- die wenigstens eine Laserverformung (25) zu einem überwiegenden Teil an Stellen des wenigstens einen Trägerprofils (2) angeordnet wird, an denen sich die wenigstens eine Haltevorrichtung (4) und das wenigstens eine Trägerprofil (2) nicht kontaktieren, und/oder
- die wenigstens eine Laserverformung (25) versetzt zu der wenigstens einen Laserschweißnaht (24) an dem wenigstens einen Trägerprofil (2) angeordnet wird, und/oder
- die wenigstens eine Laserverformung (25) und die wenigstens eine Laserschweißnaht (24) derart relativ zueinander angeordnet werden, dass die Laserverformung (25) und die wenigstens eine Laserschweißnaht (24) wenigstens einen Schnittpunkt (26) aufweisen, und/oder dass sich die wenigstens eine Laserverformung (25) in eine Richtung quer zu einer Längsrichtung (15) der Seitenwand (1) über eine größere Breite erstreckt als die wenigstens eine Laserschweißnaht (24), und/oder
- die wenigstens eine Laserverformung (25) zumindest abschnittsweise linienförmig in Form eines Zick-Zacks (27) ausgebildet wird, und/oder
- die wenigstens eine Laserschweißnaht (24) und die wenigstens eine Laserverformung (25) mit demselben Laser (8) erzeugt werden, wobei der Fokus des Lasers (8) nach der Erzeugung der wenigstens einen Laserschweißnaht (24) und vor der Erzeugung der wenigstens eine Laserverformung (25) verstellt, vorzugsweise aufgeweitet, wird.

9. Seitenwand (1) für eine Schublade, umfassend wenigstens ein Trägerprofil (2) und wenigstens ein Hohlprofil (3), wobei das wenigstens eine Trägerprofil (2) und das wenigstens eine Hohlprofil (3) zumindest abschnittsweise aus einem metallischen Werkstoff gebildet und miteinander mittels wenigstens einer Laserschweißverbindung (5) verschweißt sind, **dadurch gekennzeichnet, dass** das wenigstens eine Trägerprofil (2) und/oder das wenigstens eine Hohlprofil (3) in einem Bereich und/oder um den Bereich der wenigstens einen Laserschweißverbindung (5) wenigstens eine Prägung (6) zur Erhöhung einer Energieaufnahme von Laserlicht (7) wenigstens eines Lasers (8) zur Bildung der wenigstens einen Laserschweißverbindung (5) umfasst, wobei die wenigstens eine Prägung (6) derart in das wenigstens eine Trägerprofil (2) und/oder das wenigstens eine Hohlprofil (3) eingebracht ist, dass die wenigstens eine Prägung (6) in Form einer Riffelung vorliegt.

10. Seitenwand (1) nach Anspruch 9, wobei die wenigstens eine Prägung (6) an einer einem Innenraum (9) des wenigstens einen Trägerprofils (2) zugewandten Innenseite (10), vorzugsweise einem im Gebrauchszustand (17) der Seitenwand (1) in vertikale Richtung (11) weisenden seitlichen Steg (12), des wenigstens einen Trägerprofils (2) angeordnet ist.

11. Seitenwand (1) nach Anspruch 9 oder 10, wobei zumindest zwei, vorzugsweise genau drei, Prägungen (6) vorgesehen sind sodass die wenigstens eine Prägung (6)
- in Form einer, wellenförmigen, Riffelung (13) vorliegt und/oder in Form einer Riffelung (13) mit zumindest zwei, besonders bevorzugt zumindest fünf, weiter besonders bevorzugt zumindest zehn, Erhebungen (14), vorliegt und/oder
- einen im Wesentlichen rechteckigen Querschnitt aufweist und/oder lokal angeordnet ist und/oder
- entlang einer Längsrichtung (15) der Seitenwand (1) im Bereich eines freien Endes, vorzugsweise im Abstand von zumindest dem Fünffachen einer Materialstärke (16) des wenigstens einen Trägerprofils (2), und/oder zentral angeordnet ist und/oder
- orthogonal auf die Längsrichtung (15) von einem freien Ende im Abstand von zumindest einem Zehnfachen der Materialstärke (16) des Trägerprofils (2) und/oder ausgehend von einer im Gebrauchszustand (17) der Seitenwand (1) angeordneten Oberseite (18) des wenigstens einen Trägerprofils (2) im ersten Drittel entlang eines seitlichen Stegs (12) des wenigstens einen Trägerprofils (2) angeordnet ist und/oder
- im Gebrauchszustand (17) der Seitenwand (1) an einem seitlichen Steg (12) des wenigstens einen Trägerprofils (2) und/oder des wenigstens einen Hohlprofils (3) angeordnet ist und/oder
- zumindest ein Fünftel und/oder maximal eine Hälfte der Materialstärke (16) des wenigstens einen Trägerprofils (2) tief ist und/oder
- an einer der wenigstens einen Prägung (6) abgewandten Seite des Materials einen, vorzugsweise im Wesentlichen flächigen, Anlagebereich (20) für das wenigstens eine Hohlprofil (3) und/oder das wenigstens eine Trägerprofil (2) bildet,
wobei vorzugsweise vorgesehen ist, dass die Erhebungen (14) jeweils zwei, vorzugsweise spitz aufeinander zulaufende, Flanken (21) aufweisen,
- welche einen Winkel im Bereich zwischen 70° und 110°, vorzugsweise im Wesentlichen einen rechten Winkel, zueinander einschließen und/oder
- wobei eine der beiden Flanken (21) derart relativ zu dem wenigstens einen Trägerprofil (2) und/oder dem wenigstens einen Hohlprofil (3) orientiert wird, dass eine Normale auf die Flanke (21) kontaktlos zwischen zwei seitlichen Stegen (12) des wenigstens einen Trägerprofils (2) und/oder des wenigstens einen Hohlprofils (3) von der Seitenwand (1) wegführt und/oder
- wobei die beiden Flanken (21) eine Flankenhöhe (29) im Bereich zwischen 0,05 mm und 0,2 mm, vorzugsweise zwischen 0,1 mm und 0,15 mm, und/oder zumindest eine der beiden Flanken (21) eine Flankenlänge (30) zwischen 0,1 mm und 0,25 mm, vorzugsweise zwischen 0,15 mm und 0,2 mm, aufweisen und/oder
- wobei die Erhebungen (14) einen Flankenwinkel (31) zwischen 15° und 40°, vorzugsweise zwischen 25° und 30°, relativ zu einem seitlichen Steg (12) des wenigstens einen Trägerprofils (2) und/oder des wenigstens einen Hohlprofils (3) aufweisen und/oder zwei benachbarte Erhebungen (14) zwischen 0,2 mm und 0,5 mm, vorzugsweise zwischen 0,3 mm und 0,4 mm, voneinander beabstandet sind.

12. Seitenwand (1) nach einem der Ansprüche 9 bis 11, wobei
- die wenigstens eine Laserschweißverbindung (5) in Form einer Punkt- oder Linienlaserschweißnaht vorliegt und/oder
- das wenigstens eine Trägerprofil (2) und/oder das wenigstens eine Hohlprofil (3), vorzugsweise um einen Bereich der wenigstens einen Prägung (6), wenigstens eine Beschichtung (22), vorzugsweise Kunststoffbeschichtung, umfasst.

13. Seitenwand (1) nach einem der Ansprüche 9 bis 12, mit wenigstens einer Haltevorrichtung (4) zur Verbindung der Seitenwand (1) mit einer Schubladenrückwand oder einer Schubladenfrontwand, wobei die wenigstens eine Haltevorrichtung (4) zumindest abschnittsweise aus einem metallischen Werkstoff gebildet und mit dem wenigstens einen Trägerprofil (2) mittels wenigstens einer Laserschweißnaht (24) verschweißt ist und im Bereich der wenigstens einen Laserschweißnaht (24) wenigstens eine von der wenigstens einen Laserschweißnaht (24) gesonderte durch Laserlicht (7) hervorgerufene Laserverformung (25) aufweist, wobei vorzugsweise vorgesehen ist, dass
- die wenigstens eine Laserverformung (25) zu einem überwiegenden Teil an Stellen des wenigstens einen Trägerprofils (2) angeordnet ist, an denen die wenigstens eine Haltevorrichtung (4) und das wenigstens eine Trägerprofil (2) kontaktlos zueinander ausgebildet sind, und/oder
- die wenigstens eine Laserverformung (25) versetzt zu der wenigstens einen Laserschweißnaht (24) an dem wenigstens einen Trägerprofil (2) angeordnet ist, und/oder
- die wenigstens eine Laserverformung (25) und die wenigstens eine Laserschweißnaht (24) wenigstens einen Schnittpunkt (26) aufweisen, und/oder
- sich die wenigstens eine Laserverformung (25) in eine Richtung quer zu einer Längsrichtung (15) der Seitenwand (1) über eine größere Breite erstreckt als die wenigstens eine Laserschweißnaht (24),
- die wenigstens eine Laserverformung (25) zumindest abschnittsweise linienförmig ausgebildet ist und/oder ein Zick-Zack (27) aufweist, und/oder
- die wenigstens eine Laserschweißnaht (24) und die wenigstens eine Laserverformung (25) zumindest abschnittsweise linienförmig ausgebildet sind, und wobei die wenigstens eine Laserschweißnaht (24) und die Laserverformung (25) eine unterschiedliche Linienbreite aufweisen, vorzugsweise wobei die Laserverformung (25) eine größere Linienbreite als die wenigstens eine Laserschweißnaht (24) aufweist.

14. Trägerprofil (2) für eine Seitenwand (1) nach einem der Ansprüche 9 bis 13, wobei das Trägerprofil (2) zumindest abschnittsweise aus einem metallischen Werkstoff gebildet ist, **dadurch gekennzeichnet, dass** das Trägerprofil (2), insbesondere an einer einem Innenraum (9) des Trägerprofils (2) zugewandten Innenseite (10) und/oder an zumindest einem im Gebrauchszustand des Trägerprofils (2) in vertikale Richtung (11) weisenden seitlichen Steg (12), wenigstens eine Prägung (6) zur Erhöhung einer Energieaufnahme von Laserlicht (7) wenigstens eines Lasers (8) zur Bildung wenigstens einer Laserschweißverbindung (5) mit wenigstens einem Hohlprofil (3) umfasst, wobei die wenigstens eine Prägung (6) derart in das wenigstens eine Trägerprofil (2) eingebracht ist, dass die wenigstens eine Prägung (6) in Form einer Riffelung vorliegt.

15. Anordnung aus zumindest einem Laser (8) und zumindest einer Seitenwand (1) nach einem der Ansprüche 9 bis 13, wobei der zumindest eine Laser (8) zur Einbringung der wenigstens einen Laserschweißverbindung (5), insbesondere in einem Verfahren nach einem der Ansprüche 1 bis 8, mit einer Laseremissionsöffnung (23) in einem spitzen Winkel, vorzugsweise 15° bis 30°, besonders bevorzugt 20° bis 25°, auf eine im Gebrauchszustand (17) der zumindest einen Seitenwand (1) vertikale Richtung (11) ausgerichtet ist, sodass Laserlicht (7), insbesondere unmittelbar, im Wesentlichen im rechten Winkel auf eine Flanke (21) der wenigstens einen Prägung (6) emittierbar ist.

## Claims

1. A method for producing a side wall (1) for a drawer, comprising at least one support profile (2) consisting at least in portions of a metallic material and at least one hollow profile (3) consisting at least in portions of a metallic material, wherein the at least one support profile (2) and the at least one hollow profile (3) are welded to one another by means of at least one laser welded connection (5), **characterized in that** the at least one support profile (2) and/or the at least one hollow profile (3) has/have at least one embossing (6) prior to welding to increase an energy absorption of laser light (7) of at least one laser (8) to form the at least one laser welded connection (5) in a region and/or around the region of the at least one laser welded connection (5), and the at least one embossing (6) is melted at least in regions during the welding, wherein the at least one embossing (6) is introduced into the at least one support profile (2) and/or the at least one hollow profile (3) in such a way that the at least one embossing (6) is present in the form of a corrugation.

2. The method according to claim 1, wherein
- prior to welding, the at least one embossing (6) is arranged for increasing the energy absorption of laser light (7) in a region and/or around the region of the at least one laser welded connection (5) on the at least one support profile (2) and/or the at least one hollow profile (3), and/or
- the at least one embossing (6) is arranged on an inner side (10) facing an interior space (9) of the at least one support profile (2), preferably on at least one lateral web (12) of the at least one support profile (2) pointing in the vertical direction (11) in the state of use of the side wall (1).

3. The method according to any one of the preceding claims, wherein at least two, preferably exactly three, embossings (6) are provided, wherein that the at least one embossing (6)
- is present in the form of a wave-shaped corrugation (13), and/or in the form of a corrugation (13) with at least two, particularly preferably at least five, more particularly preferably ten, elevations (14), and/or
- has a substantially rectangular cross-section and/or is arranged locally and/or
- is arranged along a longitudinal direction (15) of the side wall (1) in the region of a free end, preferably at a distance of at least five times a material thickness (16) of the at least one support profile (2), and/or is centrally arranged and/or
- is arranged orthogonal to the longitudinal direction (15) from a free end at a distance of at least ten times the material thickness (16) of the support profile (2) and/or starting from an upper side (18) of the at least one support profile (2) arranged in the use state (17) of the side wall (1) in the first third along a lateral web (12) of the at least one support profile (2) and/or
- is arranged, in the use state (17) of the side wall (1), on a lateral web (12) of the at least one support profile (2) and/or the at least one hollow profile (3) and/or
- has a depth of at least one fifth and/or a maximum of one half of the material thickness (16) of the at least one support profile (2) and/or
- forms, on a side of the material facing away from the at least one embossing (6), a preferably substantially flat contact region (20) for the at least one hollow profile (3) and/or the at least one support profile (2).

4. The method according to claim 3, wherein the elevations (14) each have two flanks (21), preferably tapering pointedly towards one another,
- which enclose an angle in the range between 70° and 110°, preferably substantially a right angle, to each other and/or
- wherein one of the two flanks (21) is oriented relative to the at least one support profile (2) and/or the at least one hollow profile (3) in such a way that a normal to the flank (21) points away from the side wall (1) without contact between two lateral webs (12) of the at least one support profile (2) and/or the at least one hollow profile (3) and/or
- wherein the two flanks (21) have a flank height (29) in the range between 0.05 mm and 0.2 mm, preferably between 0.1 mm and 0.15 mm, and/or at least one of the two flanks (21) has a flank length (30) between 0.1 mm and 0.25 mm, preferably between 0.15 mm and 0.2 mm, and/or
- wherein the elevations (14) have a flank angle (31) of between 15° and 40°, preferably between 25° and 30°, relative to a lateral web (12) of the at least one support profile (2) and/or the at least one hollow profile (3) and/or two adjacent elevations (14) are spaced apart from one another by between 0.2 mm and 0.5 mm, preferably between 0.3 mm and 0.4 mm.

5. The method according to any one of the preceding claims, wherein
- the at least one laser welded connection (5) is introduced in the form of a point-like or linear laser weld seam, and/or
- at least one coating (22), preferably a plastic coating, is applied to the at least one support profile (2) and/or the at least one hollow profile (3), preferably in the region of the at least one embossing (6), which coating is removed before or during the welding, preferably with the at least one laser (8) and/or in regions.

6. The method according to any one of the preceding claims, wherein the at least one laser (8) for introducing the at least one laser welded connection (5) is oriented with a laser emission opening (23) at an acute angle, preferably 15° to 30°, particularly preferably 20° to 25°, to a direction (11) which is vertical in the state of use (17) of the side wall (1), wherein it is preferably provided that laser light (7) is emitted substantially at right angles onto one of the two optional flanks (21) of the at least one embossing (6).

7. The method according to any one of the preceding claims, wherein at least one mounting device (4) formed at least in portions from a metallic material is provided for connecting the side wall (1) to a drawer rear wall or a drawer front wall, wherein the at least one mounting device (4) is welded to the at least one support profile (2) by means of at least one laser weld seam (24) and a laser deformation (25) separate from the at least one laser weld seam (24) is produced in the region of the at least one laser weld seam (24) by irradiation with laser light (7).

8. The method according to claim 7, wherein
- the at least one laser weld seam (24) is arranged predominantly at locations on the at least one support profile (2) at which the at least one mounting device (4) and the at least one support profile (2) are in contact, and/or
- the at least one laser deformation (25) is arranged predominantly at locations on the at least one support profile (2) at which the at least one mounting device (4) and the at least one support profile (2) are not in contact, and/or
- the at least one laser deformation (25) is arranged offset to the at least one laser weld seam (24) on the at least one support profile (2), and/or
- the at least one laser deformation (25) and the at least one laser weld seam (24) are arranged relative to one another in such a way that the laser deformation (25) and the at least one laser weld seam (24) have at least one intersection point (26), and/or that the at least one laser deformation (25) extends in a direction transverse to a longitudinal direction (15) of the side wall (1) over a greater width than the at least one laser weld seam (24), and/or
- the at least one laser deformation (25) is formed at least in portions linearly in the form of a zigzag (27), and/or
- the at least one laser weld seam (24) and the at least one laser deformation (25) are produced with the same laser (8), the focus of the laser (8) being adjusted, preferably widened, after the at least one laser weld seam (24) has been produced and before the at least one laser deformation (25) has been produced.

9. A side wall (1) for a drawer, comprising at least one support profile (2) and at least one hollow profile (3), wherein the at least one support profile (2) and the at least one hollow profile (3) are formed at least in portions from a metallic material and are welded together by means of at least one laser welded connection (5), **characterized in that** the at least one support profile (2) and/or the at least one hollow profile (3) comprises/comprise, in a region and/or around the region of the at least one laser welded connection (5), at least one embossing (6) for increasing an energy absorption of laser light (7) of at least one laser (8) for forming the at least one laser welded connection (5), wherein the at least one embossing (6) is introduced into the at least one support profile (2) and/or the at least one hollow profile (3) in such a way that the at least one embossing (6) is present in the form of a corrugation.

10. The side wall (1) according to claim 9, wherein the at least one embossing (6) is arranged on an inner side (10) facing an interior space (9) of the at least one support profile (2), preferably on at least one lateral web (12) of the at least one support profile (2) pointing in the vertical direction (11) in the state of use (17) of the side wall (1).

11. The side wall (1) according to claim 9 or 10, wherein at least two, preferably exactly three, embossings (6) are provided in such a way that the at least one embossing (6)
- is present in the form of a wave-shaped corrugation (13), and/or in the form of a corrugation (13) with at least two, particularly preferably at least five, more particularly preferably ten, elevations (14), and/or
- has a substantially rectangular cross-section and/or is arranged locally and/or
- is arranged along a longitudinal direction (15) of the side wall (1) in the region of a free end, preferably at a distance of at least five times a material thickness (16) of the at least one support profile (2), and/or is centrally arranged and/or
- is arranged orthogonal to the longitudinal direction (15) from a free end at a distance of at least ten times the material thickness (16) of the support profile (2) and/or starting from an upper side (18) of the at least one support profile (2) arranged in the use state (17) of the side wall (1) in the first third along a lateral web (12) of the at least one support profile (2) and/or
- is arranged, in the use state (17) of the side wall (1), on a lateral web (12) of the at least one support profile (2) and/or the at least one hollow profile (3) and/or
- has a depth of at least one fifth and/or a maximum of one half of the material thickness (16) of the at least one support profile (2) and/or
- forms, on a side of the material facing away from the at least one embossing (6), a preferably substantially flat contact region (20) for the at least one hollow profile (3) and/or the at least one support profile (2),
wherein it is preferably provided that the elevations (14) each have two flanks (21), preferably tapering pointedly towards one another,
- which enclose an angle in the range between 70° and 110°, preferably substantially a right angle, to each other and/or
- wherein one of the two flanks (21) is oriented relative to the at least one support profile (2) and/or the at least one hollow profile (3) in such a way that a normal to the flank (21) points away from the side wall (1) without contact between two lateral webs (12) of the at least one support profile (2) and/or the at least one hollow profile (3) and/or
- wherein the two flanks (21) have a flank height (29) in the range between 0.05 mm and 0.2 mm, preferably between 0.1 mm and 0.15 mm, and/or at least one of the two flanks (21) has a flank length (30) between 0.1 mm and 0.25 mm, preferably between 0.15 mm and 0.2 mm, and/or
- wherein the elevations (14) have a flank angle (31) of between 15° and 40°, preferably between 25° and 30°, relative to a lateral web (12) of the at least one support profile (2) and/or the at least one hollow profile (3) and/or two adjacent elevations (14) are spaced apart from one another by between 0.2 mm and 0.5 mm, preferably between 0.3 mm and 0.4 mm.

12. The side wall (1) according to any one of claims 9 to 11, wherein
- the at least one laser welded connection (5) is in the form of a point-like or linear laser weld seam, and/or
- the at least one support profile (2) and/or the at least one hollow profile (3), comprises at least one coating (22), preferably a plastic coating preferably around a region of the at least one embossing (6).

13. The side wall (1) according to any one of claims 9 to 12, with at least one mounting device (4) for connecting the side wall (1) to a drawer rear wall or drawer front wall, wherein the at least one mounting device (4) is formed at least in portions from a metallic material and is welded to the at least one support profile (2) by means of at least one laser weld seam (24) and has a laser deformation (25) separate from the at least one laser weld seam (24) produced in the region of the at least one laser weld seam (24) by laser light (7), wherein it is preferably provided that
- the at least one laser deformation (25) is arranged predominantly at locations on the at least one support profile (2) at which the at least one mounting device (4) and the at least one support profile (2) are not in contact to each other, and/or
- the at least one laser deformation (25) is arranged offset to the at least one laser weld seam (24) on the at least one support profile (2), and/or
- the at least one laser deformation (25) and the at least one laser weld seam (24) have at least one intersection point (26), and/or
- the at least one laser deformation (25) extends in a direction transverse to a longitudinal direction (15) of the side wall (1) over a greater width than the at least one laser weld seam (24),
- the at least one laser deformation (25) is at least partially linear and/or has a zigzag (27), and/or
- the at least one laser weld seam (24) and the at least one laser deformation (25) are formed linearly at least in portions, and wherein the at least one laser weld seam (24) and the laser deformation (25) have a different line width, preferably wherein the laser deformation (25) has a greater line width than the at least one laser weld seam (24).

14. A support profile (2) for a side wall (1) according to any one of claims 9 to 13, wherein the support profile (2) is formed at least in portions from a metallic material, **characterized in that** the support profile (2), in particular on an inner side (10) facing an interior (9) of the support profile (2) and/or on at least one lateral web (12) pointing in the vertical direction (11) in the state of use of the carrier profile (2), comprises at least one embossing (6) for increasing the energy absorption of laser light (7) of at least one laser (8) for forming at least one laser welded connection (5) with at least one hollow profile (3), wherein the at least one embossing (6) is introduced into the at least one support profile (2) and/or the at least one hollow profile (3) in such a way that the at least one embossing (6) is present in the form of a corrugation.

15. An arrangement of at least one laser (8) and at least one side wall (1) according to any one of claims 9 to 13, wherein the at least one laser (8) for introducing the at least one laser welded connection (5), in particular in a method according to any one of claims 1 to 8, is aligned with a laser emission opening (23) at an acute angle, preferably 15° to 30°, particularly preferably 20° to 25°, to a direction (11) that is vertical in the use state (17) of the at least one side wall (1), so that laser light (7) can be emitted, in particular directly, essentially at a right angle onto a flank (21) of the at least one embossing (6).

## Revendications

1. Procédé pour fabriquer une paroi latérale (1) pour un tiroir, comprenant au moins un profil porteur (2) constitué au moins par sections d'un matériau métallique et au moins un profil creux (3) constitué au moins par sections d'un matériau métallique, ledit au moins un profil porteur (2) et ledit au moins un profil creux (3) étant soudés l'un à l'autre au moyen d'au moins un joint de soudure au laser (5), **caractérisé en ce que** ledit au moins un profil porteur (2) et/ou ledit au moins un profil creux (3) présente avant le soudage, dans une zone et/ou autour de la zone dudit au moins un joint de soudure au laser (5), au moins un estampage (6) destiné à augmenter une absorption d'énergie de la lumière laser (7) d'au moins un laser (8) pour la formation dudit au moins un joint de soudure au laser (5), et **en ce que** ledit au moins un estampage (6) est au moins par endroits fondu au cours du soudage, ledit au moins un estampage (6) étant réalisé dans ledit au moins un profil porteur (2) et/ou ledit au moins un profil creux (3) de telle sorte que ledit au moins un estampage (6) se présente sous la forme d'un striage.

2. Procédé selon la revendication 1, dans lequel
- avant le soudage, ledit au moins un estampage (6) destiné à augmenter l'absorption d'énergie de la lumière laser (7) est disposé sur ledit au moins un profil porteur (2) et/ou ledit au moins un profil creux (3) dans une zone et/ou autour de la zone dudit au moins un joint de soudure au laser (5), et/ou
- ledit au moins un estampage (6) est disposé sur une face intérieure (10) dudit au moins un profil porteur (2) tournée vers un espace intérieur (9) dudit au moins un profil porteur (2), de préférence sur au moins une nervure latérale (12) orientée, à l'état d'utilisation de la paroi latérale (1), dans une direction verticale (11).

3. Procédé selon l'une des revendications précédentes, dans lequel au moins deux, de préférence exactement trois, estampages (6) sont prévus, dans lequel au moins un estampage (6)
- se présente sous la forme d'un striage (13) ondulé et/ou sous la forme d'un striage (13) comportant au moins deux, de préférence au moins cinq, encore plus préférentiellement au moins dix, reliefs (14), et/ou
- présente une section transversale sensiblement rectangulaire et/ou est disposé localement, et/ou
- est disposé le long d'une direction longitudinale (15) de la paroi latérale (1) dans la zone d'une extrémité libre, de préférence à une distance au moins égale à cinq fois une épaisseur de matériau (16) dudit au moins un profil porteur (2), et/ou est disposé de manière centrale, et/ou
- est disposé orthogonalement à la direction longitudinale (15) à partir d'une extrémité libre à une distance au moins égale à dix fois l'épaisseur de matériau (16) du profil porteur (2) et/ou, en partant d'une face supérieure (18), à l'état d'utilisation (17) de la paroi latérale (1), dudit au moins un profil porteur (2), dans le premier tiers le long d'une nervure latérale (12) dudit au moins un profil porteur (2), et/ou
- est disposé, à l'état d'utilisation (17) de la paroi latérale (1), sur une nervure latérale (12) dudit au moins un profil porteur (2) et/ou dudit au moins un profil creux (3), et/ou
- présente une profondeur correspondant à au moins un cinquième et/ou à au plus une moitié de l'épaisseur de matériau (16) dudit au moins un profil porteur (2), et/ou
- forme, sur une face du matériau opposée audit au moins un estampage (6), une zone d'appui (20), de préférence sensiblement plane, pour ledit au moins un profil creux (3) et/ou ledit au moins un profil porteur (2).

4. Procédé selon la revendication 3, dans lequel les reliefs (14) présentent chacun deux flancs (21), de préférence convergeant en pointe,
- lesquels définissent entre eux un angle compris entre 70° et 110°, de préférence sensiblement un angle droit, et/ou
- l'un des deux flancs (21) étant orienté par rapport audit au moins un profil porteur (2) et/ou audit au moins un profil creux (3) de telle sorte qu'une normale au flanc (21) s'éloigne de la paroi latérale (1) sans contact entre deux nervures latérales (12) dudit au moins un profil porteur (2) et/ou dudit au moins un profil creux (3), et/ou
- les deux flancs (21) présentant une hauteur de flanc (29) comprise entre 0,05 mm et 0,2 mm, de préférence entre 0,1 mm et 0,15 mm, et/ou au moins l'un des deux flancs (21) présentant une longueur de flanc (30) comprise entre 0,1 mm et 0,25 mm, de préférence entre 0,15 mm et 0,2 mm, et/ou
- les reliefs (14) présentant un angle de flanc (31) compris entre 15° et 40°, de préférence entre 25° et 30°, par rapport à une nervure latérale (12) dudit au moins un profil porteur (2) et/ou dudit au moins un profil creux (3), et/ou deux reliefs (14) adjacents étant espacés l'un de l'autre de 0,2 mm à 0,5 mm, de préférence de 0,3 mm à 0,4 mm.

5. Procédé selon l'une des revendications précédentes, dans lequel
- ledit au moins un joint de soudure au laser (5) est réalisé sous la forme d'un cordon de soudure au laser ponctuel ou linéaire, et/ou
- au moins un revêtement (22), de préférence un revêtement plastique, est appliqué sur ledit au moins un profil porteur (2) et/ou ledit au moins un profil creux (3), de préférence dans la zone dudit au moins un estampage (6), lequel revêtement étant enlevé avant ou au cours du soudage, de préférence au moyen dudit au moins un laser (8) et/ou par endroits.

6. Procédé selon l'une des revendications précédentes, dans lequel, pour la réalisation dudit au moins un joint de soudure au laser (5), ledit au moins un laser (8) est orienté avec une ouverture d'émission (23) selon un angle aigu par rapport à une direction verticale (11) à l'état d'utilisation (17) de la paroi latérale (1), de préférence compris entre 15° et 30°, encore plus préférentiellement entre 20° et 25°, et dans lequel il est de préférence prévu d'émettre de la lumière laser (7) de façon sensiblement perpendiculaire sur l'un des deux flancs (21) éventuellement présents dudit au moins un estampage (6).

7. Procédé selon l'une des revendications précédentes, dans lequel au moins un dispositif de maintien (4), constitué au moins par sections d'un matériau métallique, est prévu pour relier la paroi latérale (1) à une paroi arrière de tiroir ou à une paroi frontale de tiroir, ledit au moins un dispositif de maintien (4) étant soudé audit au moins un profil porteur (2) au moyen d'au moins un cordon de soudure au laser (24), et une déformation laser (25) distincte dudit au moins un cordon de soudure au laser (24) étant générée dans la zone dudit au moins un cordon de soudure au laser (24) par irradiation de lumière laser (7).

8. Procédé selon la revendication 7, dans lequel
- ledit au moins un cordon de soudure au laser (24) est disposé en majeure partie à des endroits dudit au moins un profil porteur (2) où ledit au moins un dispositif de maintien (4) et ledit au moins un profil porteur (2) sont en contact, et/ou
- ladite au moins une déformation laser (25) est disposée en majeure partie à des endroits dudit au moins un profil porteur (2) où ledit au moins un dispositif de maintien (4) et ledit au moins un profil porteur (2) ne sont pas en contact, et/ou
- ladite au moins une déformation laser (25) est disposée sur ledit au moins un profil porteur (2) de manière décalée par rapport audit au moins un cordon de soudure au laser (24), et/ou
- ladite au moins une déformation laser (25) et ledit au moins un cordon de soudure au laser (24) sont disposés l'un par rapport à l'autre de manière que la déformation laser (25) et ledit au moins un cordon de soudure au laser (24) présentent au moins un point d'intersection (26), et/ou que ladite au moins une déformation laser (25) s'étende dans une direction transversale à une direction longitudinale (15) de la paroi latérale (1) sur une largeur supérieure à celle dudit au moins un cordon de soudure au laser (24), et/ou
- ladite au moins une déformation laser (25) est réalisée au moins par sections sous forme linéaire en zigzag (27), et/ou
- ledit au moins un cordon de soudure au laser (24) et ladite au moins une déformation laser (25) sont réalisés au moyen du même laser (8), le foyer du laser étant modifié, de préférence élargi, après la réalisation dudit au moins un cordon de soudure au laser (24) et avant la réalisation de ladite au moins une déformation laser (25).

9. Paroi latérale (1) pour un tiroir, comprenant au moins un profil porteur (2) et au moins un profil creux (3), ledit au moins un profil porteur (2) et ledit au moins un profil creux (3) étant constitués au moins par sections d'un matériau métallique et étant soudés l'un à l'autre au moyen d'au moins un joint de soudure au laser (5), **caractérisée en ce que** ledit au moins un profil porteur (2) et/ou ledit au moins un profil creux (3) comprend, dans une zone et/ou autour de la zone dudit au moins un joint de soudure au laser (5), au moins un estampage (6) destiné à augmenter une absorption d'énergie de la lumière laser (7) d'au moins un laser (8) pour la formation dudit au moins un joint de soudure au laser (5), ledit au moins un estampage (6) étant réalisé dans ledit au moins un profil porteur (2) et/ou ledit au moins un profil creux (3) de telle sorte que ledit au moins un estampage (6) se présente sous la forme d'un striage.

10. Paroi latérale (1) selon la revendication 9, dans laquelle ledit au moins un estampage (6) est disposé sur une face intérieure (10) dudit au moins un profil porteur (2) tournée vers un espace intérieur (9) dudit au moins un profil porteur (2), de préférence sur une nervure latérale (12) orientée, à l'état d'utilisation (17) de la paroi latérale (1), dans une direction verticale (11).

11. Paroi latérale (1) selon la revendication 9 ou 10, dans laquelle au moins deux, de préférence exactement trois, estampages (6) sont prévus, dans lequel au moins un estampage (6)
- se présente sous la forme d'un striage (13) ondulé et/ou sous la forme d'un striage (13) comportant au moins deux, de préférence au moins cinq, encore plus préférentiellement au moins dix, reliefs (14), et/ou
- présente une section transversale sensiblement rectangulaire et/ou est disposée localement, et/ou
- est disposée le long d'une direction longitudinale (15) de la paroi latérale (1) dans la zone d'une extrémité libre, de préférence à une distance au moins égale à cinq fois une épaisseur de matériau (16) dudit au moins un profil porteur (2), et/ou est disposée de manière centrale, et/ou
- est disposé orthogonalement à la direction longitudinale (15) à partir d'une extrémité libre à une distance au moins égale à dix fois l'épaisseur de matériau (16) du profil porteur (2) et/ou, en partant d'une face supérieure (18), à l'état d'utilisation (17) de la paroi latérale (1), dudit au moins un profil porteur (2) dans le premier tiers le long d'une nervure latérale (12) du profil porteur (2), et/ou
- est disposé, à l'état d'utilisation (17) de la paroi latérale (1), sur une nervure latérale (12) dudit au moins un profil porteur (2) et/ou dudit au moins un profil creux (3), et/ou
- présente une profondeur correspondant à au moins un cinquième et/ou au plus à une moitié de l'épaisseur de matériau (16) du profil porteur (2), et/ou
- forme, sur une face du matériau opposée à ladite au moins un estampage (6), une zone d'appui (20), de préférence sensiblement plane, pour ledit au moins un profil creux (3) et/ou ledit au moins un profil porteur (2),
et dans laquelle il est de préférence prévu que les reliefs (14) présentent chacun deux flancs (21), de préférence convergeant en pointe,
- lesquels définissent entre eux un angle compris entre 70° et 110°, de préférence sensiblement un angle droit, et/ou
- l'un des deux flancs (21) étant orienté par rapport audit au moins un profil porteur (2) et/ou audit au moins un profil creux (3) de telle sorte qu'une normale au flanc (21) s'éloigne de la paroi latérale (1) sans contact entre deux nervures latérales (12) dudit au moins un profil porteur (2) et/ou dudit au moins un profil creux (3), et/ou
- les deux flancs (21) présentant une hauteur de flanc (29) comprise entre 0,05 mm et 0,2 mm, de préférence entre 0,1 mm et 0,15 mm, et/ou au moins l'un des deux flancs (21) présentant une longueur de flanc (30) comprise entre 0,1 mm et 0,25 mm, de préférence entre 0,15 mm et 0,2 mm, et/ou
- les reliefs (14) présentant un angle de flanc (31) compris entre 15° et 40°, de préférence entre 25° et 30°, par rapport à une nervure latérale (12) dudit au moins un profil porteur (2) et/ou dudit au moins un profil creux (3), et/ou deux reliefs (14) adjacents étant espacés l'un de l'autre de 0,2 mm à 0,5 mm, de préférence de 0,3 mm à 0,4 mm.

12. Paroi latérale (1) selon l'une des revendications 9 à 11, dans laquelle
- ledit au moins un joint de soudure au laser (5) se présente sous la forme d'un cordon de soudure au laser ponctuel ou linéaire, et/ou
- ledit au moins un profil porteur (2) et/ou ledit au moins un profil creux (3) comprend, de préférence autour d'une zone dudit au moins un estampage (6), au moins un revêtement (22), de préférence un revêtement plastique.

13. Paroi latérale (1) selon l'une des revendications 9 à 12, comprenant au moins un dispositif de maintien (4) destiné à relier la paroi latérale (1) à une paroi arrière de tiroir ou à une paroi frontale de tiroir, ledit au moins un dispositif de maintien (4) étant constitué au moins par sections d'un matériau métallique et étant soudé audit au moins un profil porteur (2) au moyen d'au moins un cordon de soudure au laser (24), et présentant, dans la zone dudit au moins un cordon de soudure au laser (24), au moins une déformation laser (25) distincte du cordon de soudure au laser (24) et générée par la lumière laser (7), dans laquelle il est de préférence prévu que
- ladite au moins une déformation laser (25) soit disposée en majeure partie à des endroits dudit au moins un profil porteur (2) où ledit au moins un dispositif de maintien (4) et ledit au moins un profil porteur (2) sont réalisés sans contact l'un avec l'autre, et/ou
- ladite au moins une déformation laser (25) soit disposée sur ledit au moins un profil porteur (2) de manière décalée par rapport audit au moins un cordon de soudure au laser (24), et/ou
- ladite au moins une déformation laser (25) et ledit au moins un cordon de soudure au laser (24) présentent au moins un point d'intersection (26), et/ou
- ladite au moins une déformation laser (25) s'étende dans une direction transversale à une direction longitudinale (15) de la paroi latérale (1) sur une largeur supérieure à celle dudit au moins un cordon de soudure au laser (24),
- ladite au moins une déformation laser (25) soit réalisée au moins par section sous forme linéaire et/ou présente un motif en zigzag (27), et/ou
- ledit au moins un cordon de soudure au laser (24) et ladite au moins une déformation laser (25) soient réalisés au moins par sections sous forme linéaire, et ledit au moins un cordon de soudure au laser (24) et ladite au moins une déformation laser (25) présentent des largeurs de ligne différentes, la déformation laser (25) présentant de préférence une largeur de ligne supérieure à celle du cordon de soudure au laser (24).

14. Profil porteur (2) pour une paroi latérale (1) selon l'une des revendications 9 à 13, dans lequel le profil porteur (2) est constitué au moins par sections d'un matériau métallique, **caractérisé en ce que** le profil porteur (2) comprend, en particulier sur une face intérieure (10) tournée vers un espace intérieur (9) du profil porteur (2) et/ou sur au moins une nervure latérale (12) orientée, à l'état d'utilisation du profil porteur (2), en direction verticale (11), au moins un estampage (6) destiné à augmenter une absorption d'énergie de la lumière laser (7) d'au moins un laser (8) pour la formation d'au moins un joint de soudure au laser (5) avec au moins un profil creux (3), ledit au moins un estampage (6) étant réalisé dans ledit au moins un profil porteur (2) de telle sorte que ledit au moins estampage (6) se présente sous la forme d'un striage.

15. Ensemble composé d'au moins un laser (8) et d'au moins une paroi latérale (1) selon l'une des revendications 9 à 13, ledit au moins un laser (8) étant orienté, pour la réalisation dudit au moins un joint de soudure au laser (5), notamment dans un procédé selon l'une des revendications 1 à 8, avec une ouverture d'émission (23) selon un angle aigu par rapport à une direction verticale (11) à l'état d'utilisation (17) de la paroi latérale (1), de préférence compris entre 15° et 30°, encore plus préférentiellement entre 20° et 25°, de sorte que de la lumière laser (7) peut être émise, en particulier directement, sensiblement perpendiculairement à un flanc (21) dudit au moins un estampage (6).
